(19)

Europäisches
Patentamt
European
Patent Office
Office européen
des brevets

(11) **EP 2 507 647 B1**

(12) **EUROPEAN PATENT SPECIFICATION**

(45) Date of publication and mention
of the grant of the patent:
**02.11.2016 Bulletin 2016/44**

(51) Int Cl.:
***G01S 7/40*** *(2006.01)*     ***G01S 13/44*** *(2006.01)*
***G01S 13/42*** *(2006.01)*

(21) Application number: **09851905.1**

(22) Date of filing: **01.12.2009**

(86) International application number:
**PCT/SE2009/051359**

(87) International publication number:
**WO 2011/068442 (09.06.2011 Gazette 2011/23)**

(54) **METHOD FOR ANGULAR FOCUSING OF SIGNALS IN SCANNING RADAR SYSTEMS**

VERFAHREN ZUR WINKELIGEN FOKUSSIERUNG VON SIGNALEN BEI SCANNENDEN
RADARSYSTEMEN

PROCÉDÉ DE CONCENTRATION ANGULAIRE DE SIGNAUX DANS DES SYSTÈMES DE
BALAYAGE RADAR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**10.10.2012 Bulletin 2012/41**

(73) Proprietor: **Saab AB**
**581 88 Linköping (SE)**

(72) Inventor: **HÄMÄLÄINEN, Mikael**
**S-740 10 Almunge (SE)**

(74) Representative: **Zacco Sweden AB**
**P.O. Box 5581**
**114 85 Stockholm (SE)**

(56) References cited:
**EP-A1- 1 657 566**     **EP-A2- 0 477 156**
**WO-A1-98/01771**     **US-A- 4 060 807**
**US-A- 5 003 313**     **US-A1- 2008 012 765**
**US-A1- 2008 042 896**     **US-B1- 6 853 330**
**US-B1- 6 937 186**     **US-B1- 7 671 789**
**US-B2- 6 661 366**

• **DAVID MURROW ED - SKOLNIK M I (ED):
"Chapter 20: Height Finding and 3D Radar", 1
January 1990 (1990-01-01), RADAR HANDBOOK,
MCGRAW-HILL, NEW YORK [U.A.], PAGE(S) 20/1
- 20/40, XP007918537, ISBN: 978-0-07-057913-2 *
the whole document ***

Printed by Jouve, 75001 PARIS (FR)

**Description**

TECHNICAL FIELD

The present invention relates to a method for angular focusing of signals in a scanning radar system according to the preamble of claim 1, and to a scanning radar system according to the preamble of claim 16.

BACKGROUND OF THE PRESENT INVENTION

Radar is a sensor which is used in different applications. In its simplest form it is used for determining the distance to an object by measuring the time it takes for a pulse, which is transmitted from the radar, to travel via the object and reflected back by the object to the radar. The radar can also be used for determining the angle to the object in a scanning radar application. The angular dimension in the radar image is built up as pulses that are transmitted by the radar and reflected by the object, are received by the radar.

In its simplest form, the angle determination is performed by measuring a maximal amplitude for a number of pulses reflected by the detected object. However, when measuring the maximal amplitude, the angle determination is normally influenced by signal variations between the received pulses and is therefore characterized by an inaccuracy in the measurement.

In order to improve the angle determination, a monopulse radar system could be used. A monopulse radar system is formed around two (one dimensional) or four (two dimensional) parallel or squinted antenna lobes. Each lobe may be formed by a respective antenna element and on a respective channel. Angle determination of the object in a monopulse radar system is performed on the basis of a calculated antenna pointing error. The antenna pointing error is calculated by a combination of signals transmitted by the respective antenna element (on respective channels), reflected by the object and received at the respective antenna element.

In order to improve angular accuracy and resolution of the monopulse radar system, a method sometimes referred to as Monopulse Beam Sharpening (MBS) has been suggested. This method has been described e.g. by Lacomme et al. in "Air and Spaceborne Radar Systems", ISBN 1-891121-13-8, SciTech Publishing 2001. MBS increases the angular position accuracy to objects scanned by the monopulse antenna. In general terms this is achieved by, for each angular position of an object (i.e. for each measured antenna angle at which radar reflections are detected), computing an antenna pointing error (or antenna error angle) and then calculating a corrected angular position of the object as:

*corrected angular position = measured antenna angle ± antenna pointing error*

In theory, the corrected angular position is constant and corresponds to the actual direction to the object during a full radar scan over the object. However, there is always a certain information uncertainty, depending on SNR (Signal-to-Noise Ratio) and depending on whether the measured signal consists in one dominating reflection or a multiple of reflections. MBS is moreover robust and not sensitive to amplitude variations in the measured signal. However, the maximal one pulse SNR must not be too low for MBS to work properly.

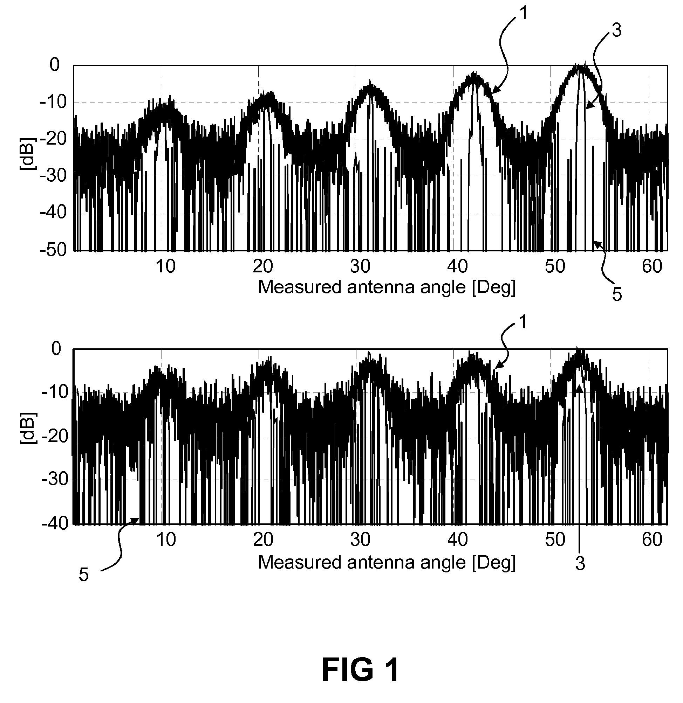

The diagrams in Fig. 1 illustrate signals derivable from radar signals detected by the radar system as a function of antenna angle during a simulated radar scan over five point-shaped objects located at the same distance from the radar system but separated in angle. In the upper diagram the maximal one pulse SNR for the objects varies between 10 and 20 dB. The curve denoted by reference numeral 1 represents a sum signal for the signals sent by the respective antenna element, reflected by the objects and received at the respective antenna element. The curve denoted by reference numeral 3 represents a signal processed with conventional MBS, from which curve it can be seen that the power peaks are "focused" compared to the power peaks of the sum signal 1. However, it can also be seen that for the weakest object (the leftmost in the diagram), the focus is somewhat deteriorated. The bottom diagram in Fig. 1 illustrates corresponding signals obtained from a simulation in which the maximal one pulse SNR for the objects varies between 5 and 10 dB. From this diagram it can be seen that the focus of the MBS-processed signal 3 is deteriorated for objects with a maximal one pulse SNR below 10 dB.

Another limitation with conventional MBS is that the signal power concentration is performed by re-positioning signal power in the angular domain between adjacent angle segments. With this procedure, signal energy is moved from a large part of the available angle segments to adjacent angle segments, which causes large and rapid signal variations in the MBS-processed radar signal from which the radar image is generated. This is clearly seen when studying the MBS-processed signal 3 in the diagrams of Fig. 1, in which reference numeral 5 indicates power peaks caused by concentrating the signal power of adjacent angle segments to the angle segments at which the peaks occur. The radar image rendering means of the radar system may erroneously interpret the power peaks 5 of the MBS-processed signal 3 as reflections of low SNR objects and hence erroneously generate object representations not corresponding to true objects in the radar images.

US 6,661,366 B2, US 2008/042896 A1, and US 7,671,789 B1 disclose prior art systems.

SUMMARY

It is an object of the present invention to solve or at least mitigate at least one of the above mentioned problems by providing an alternative method for angular focusing of signals.

The object is achieved by a method of angular focusing of signals according to claims 1 or 2.

The object is also achieved by a scanning radar system according to claims 8 or 9.

The proposed way of calculating a focused radar signal by means of adapted filtering improves power re-positioning in comparison with conventional Monopulse Beam Sharpening (MBS) techniques. In particular, the adapted filtering of the updated radar signal results in a focused radar signal not suffering from the large and frequently occurring signal fluctuations normally present in a radar signal processed using conventional MBS. Furthermore, the adapted filtering results in efficient focusing of the measured signals also for objects having very low maximal one pulse Signal to Noise Ratio (SNR).

A result of the proposed invention is a more precise object analysis since the focused radar signal offers a very precise determination of angular positions of illuminated objects (i.e. the object reflecting the antenna beam). The precise object analysis may be used in many different fields of application.

For example, the focused radar signal can be provided to a radar image rendering unit of the scanning radar system for generating radar images based thereon. Since the focused radar signal is smoother than radar signals focused using conventional MBS and typically lacks large power peaks outside the angular range of the illuminated objects, radar images generated from the focused radar signal are less likely to comprise "fake" objects than radar images generated using MBS.

The focused radar signal may also be used for automatic navigation control. For example, if the radar system is included in a vehicle, such as an aircraft, the focused radar signal may be provided to a navigation control unit adapted to automatically navigate the vehicle based on the focused radar signal (and hence the angular positions of nearby objects).

An essential feature of the invention is the calculation of an updated radar signal based on the measured radar signal and the antenna pointing error signal. Basically, what is performed in this step is that the angular information of the measured radar signal(s), which angular information is indicative of the power received for a plurality of antenna angles, is updated with angular information indicative of the true angle to the illuminated object for the plurality of antenna angles.

This may be achieved by replacing the measured phase term with a new phase term that has a better characteristic for angular focusing. The unique property of the new phase term is that all illuminated objects are given a well defined phase term that can be re-created for a signal adapted compression filter. Hence, the step of forming an updated radar signal with a well defined phase term allows for efficient angular focusing by means of adapted filtering.

The signal adapted filter is preferably calculated based on the characteristics of the at least one antenna. This is advantageous in that the filter can be predetermined, i.e. calculated prior to use. Since the filter can be calculated and validated prior to use, the robustness of the radar system is increased. Another advantage is that fewer computations have to be performed by the radar system in real time during radar measurements. The antenna characteristics may comprise information on the beam shape of the at least one antenna beam and/or the scanning movement of the at least one antenna (and hence the movement of the at least one antenna beam). However, the signal adapted filter may also be calculated based on a measured reference radar signal. A reference radar signal should herein be interpreted as a radar signal which is reflected by an object having a known position and known radar-reflective properties. For example, the signal adapted filter may be calculated by measuring and analyzing a reference radar signal being a reflection of a radar signal transmitted by the radar systems and reflected by a dominating reference reflector of the radar system.

Preferably, the antenna pointing error signal is filtered using an average forming filter of low order, for example a Finite Impulse Response (FIR) filter, and the updated radar signal is calculated based on the filtered antenna pointing error signal.

The scanning radar system may be a scanning monopulse radar system comprising at least two separate antenna elements for measuring at least two different radar signals in response to received antenna beam reflections, or a scanning non-monopulse radar system measuring only a single radar signal in response to received antenna beam reflections. The method is applicable both to purely amplitude-comparing monopulse radar systems, purely phase-comparing monopulse radar systems and to monopulse radar systems using a combination of amplitude-comparison and phase-comparison.

When the proposed method is implemented in a scanning monopulse radar system comprising a first and at least a second antenna element, the method may comprise the steps of:

- measuring a first radar signal and a second radar signal as functions of antenna angle, which first and second radar signals are indicative of the power of antenna beam reflections detected by the respective antenna element at a plurality of antenna angles;
- forming from said first and second radar signals a sum signal and a difference signal; and,
- calculating the antenna pointing error signal using a ratio of said difference signal and said sum signal.

In the monopulse scenario, the updated radar signal may then be calculated from the sum signal and an antenna pointing error signal formed by using the ratio of the difference signal and the sum signal.

When the proposed method is implemented in a scanning non-monopulse radar system the method may comprise the steps of:

- measuring a single radar signal as a function of antenna angle, which radar signal is indicative of the power of antenna beam reflections detected at a plurality of antenna angles;
- estimating at least a first derivative signal of the measured radar signal with respect to the antenna angle; and
- calculating the antenna pointing error using a ratio of said at least first derivative signal and the measured radar signal.

That is, in a non-monopulse radar system measuring only a single radar signal in response to received antenna beam reflections, the ratio of the first derivative signal of the measured radar signal and the radar signal itself, which ratio may be regarded as related to the ratio of the difference signal and the sum signal in a monopulse system, can be used to determine an antenna pointing error. The first derivative signal of the measured radar signal may be estimated in several different ways, for example it may be numerically estimated using a plurality of discrete values of the measured radar signal. In the non-monopulse scenario, the updated radar signal may then be calculated from the measured radar signal and the antenna pointing error signal.

The adaptive filtering may be performed in the time domain or the frequency domain. Filtering in the time domain may be performed by convolution of the updated radar signal and the signal adapted filter whereas filtering in the frequency domain may be performed by multiplying the updated radar signal with the signal adapted filter. Filtering in the frequency domain is advantageous in that the computational power requirements of the radar system are reduced.

Preferably, amplitude weighting is used during filtering to suppress noise and non-contributive signal content. Amplitude weighting may be used both when filtering takes place in the time domain and when filtering takes place in the frequency domain. Amplitude weighting may be based e.g. on a Taylor weighting function or a Hamming weighting function.

Compared to conventional MBS, the proposed adapted filtering technique has a significantly improved capacity for focusing objects characterized by low SNR. Based on simulated and measured data, it has been shown that the proposed method has a capacity to focus objects characterized by an extremely low one pulse SNR (< 5 dB).

The method for adapted filtering is further robust and insensitive to signal amplitude variations. The method also works well for frequency agility and generates a high accuracy for single targets.

Further advantages are achieved by implementing one or several of the features of the dependent claims, which features will be further described in the detailed description following hereinafter.

BRIEF DESCRIPTION OF THE DRAWINGS

In the following the invention will be described in a non-limiting way and in more detail with reference to exemplary embodiments illustrated in the enclosed drawings, in which:

Figure 1    illustrates signals derivable from radar signals measured as a result of a simulated monopulse radar scan over five point-shaped objects, and the result of conventional Monopulse Beam Sharpening (MBS) of the measured radar signals.

Figure 2    illustrates schematically a scanning monopulse radar system according to an exemplary embodiment of the invention.

Figure 3    illustrates the principles for angle determination in the monopulse radar system illustrated in Fig. 2.

Figure 4    illustrates a sum signal and a difference signal calculated as a result of a simulated monopulse radar scan over five point-shaped objects.

Figure 5    illustrates a filtered and non-filtered antenna pointing error signal calculated as a result of a simulated monopulse radar scan over five point-shaped objects.

Figure 6    illustrates the amplitude and the fictive frequency for an updated radar signal calculated as a result of a simulated monopulse radar scan over five point-shaped objects.

Figure 7    illustrates an exemplary antenna diagram of a monopulse radar antenna.

Figure 8    illustrates a theoretical antenna pointing error signal derived from the antenna diagram illustrated in Fig. 7

Figure 9    illustrates a comparison between a focused radar signal calculated according to an exemplary embodiment of the invention and a sum signal, both calculated as a result of a simulated monopulse radar scan over five point-shaped objects.

Figure 10   illustrates a comparison between a focused radar signal focused in the angular direction according to the principles of the invention and a focused radar signal focused in the angular direction using conventional MBS.

Figure 11   illustrates the fictive frequency of a filter signal which may be used to calculate a focused radar signal according an exemplary embodiment of the invention, and the fictive frequency of an updated radar signal before frequency tuning.

Figure 12   illustrates the fictive frequency of the filter signal illustrated in Fig. 11, and the fictive frequency of an updated radar signal after frequency tuning.

Figure 13   illustrates an updated radar signal used in an exemplary embodiment of the invention, an amplitude weighting function used for amplitude weighting of the updated radar signal, and the updated radar signal after amplitude weighting.

Figure 14   illustrates a comparison between a focused radar signal calculated according to another exemplary embodiment of the invention and a sum signal, both calculated as a result of a simulated monopulse radar scan over five point-shaped objects.

Figure 15   illustrates a radar signal measured as a result of a simulated non-monopulse radar scan over five point-shaped objects.

Figure 16   illustrates the radar signal in Fig. 15 and a signal being an approximation of the first derivative of the radar signal.

Figure 17   illustrates a filtered and non-filtered antenna pointing error signal calculated as a result of the simulated non-monopulse radar scan over five point-shaped objects.

Figure 18   illustrates the amplitude and fictive frequency for an updated radar signal calculated as a result of a simulated non-monopulse radar scan over five point-shaped objects.

Figure 19   illustrates a comparison between a focused radar signal calculated according to an exemplary embodiment of the invention and a measured radar signal, both obtained as a result of a simulated non-monopulse radar scan over five point-shaped objects.

Figure 20   is a flowchart illustrating an exemplary method for determining the angular position of an object according to the invention.

Figure 21   illustrates schematically a scanning radar system according to an exemplary embodiment of the invention.

## DETAILED DESCRIPTION OF PREFERRED EMBODIMENTS

The present invention relates to a method for focusing signals measured by scanning radar systems, which method increases the accuracy in the determination of the angular position of an illuminated object compared to other known methods. This is achieved by a novel way of processing the reflected radar signals received by the radar system. A reflected radar signal will be registered by the scanning radar system as a signal having an amplitude which varies as a function of antenna angle. The antenna angle is the angle indicating the angular position of the antenna in relation to a reference direction, such as true north or a current direction of movement of a vehicle in which the radar system is used. Typically, the antenna angle is measured as the angle between the antenna boresight and said reference direction. A reflected radar signal registered by the radar system will hereinafter be referred to as a measured radar signal. The proposed signal processing involves "angular focusing" of signals obtainable from the measured radar signals, which focusing is achieved partly by means of signal adapted filtering. Therefore, the method described herein for determining the angular position of an object will be referred to as "angular focusing through adapted filtering".

As will be described below, angular focusing through adapted filtering is applicable both to monopulse radar systems measuring at least two different radar signals by means of at least two separate antenna elements, and to non-monopulse radar systems (or single-channel radar systems) measuring a single radar signal, typically by means of a single antenna element. Below, angular focusing through adapted filtering in scanning monopulse radar systems will be described under the heading "Monopulse Focusing" whereas angular focusing through adapted filtering in scanning non-monopulse radar systems will be described under the heading "Non-Monopulse Focusing".

Monopulse Focusing

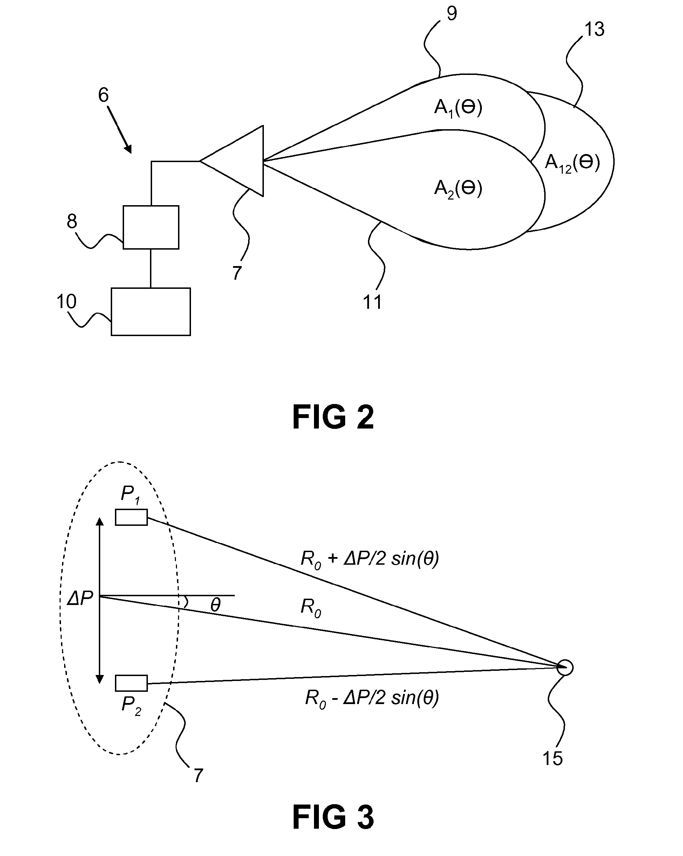

Fig. 2 illustrates schematically a scanning monopulse radar system 6 and Fig. 3 illustrates the principles for angle determination employed by the system. In this exemplary embodiment, the radar system is a scanning monopulse radar system 6 using a combination of amplitude-comparison and phase-comparison of measured radar signals to determine the angular positions of objects according to principles well known in the art. However, the invention is applicable also to purely amplitude-comparing monopulse radar systems and purely phase-comparing monopulse radar systems. The scanning monopulse radar system 6 comprises a scanning antenna 7 having two separate antenna elements $P_1$ and $P_2$ which are separated from each other by a distance $\Delta P$, and an antenna receiver 8 connected to the antenna 7. The antenna 7 generates at least two squinted antenna beams 9, 11 which are transmitted by the respective antenna elements $P_1$ and $P_2$. After transmission, the squinted antenna beams 9, 11 are combined into a combined antenna beam 13. The combined antenna beam 13 illuminates an object 15 and the transmitted radar signal density $S_{transmitted12}$ at the illuminated object 15 is given by the expression:

$$S_{transmitte\,d_{12}} = A_{12}(\theta)\exp(j\phi_0) \qquad\qquad (\text{Eq.1})$$

where $A_{12}(\theta)$ is the sum of the antenna gains of the antenna elements $P_1$ and $P_2$, as a function of the angle $\theta$ between the antenna boresight and the signal source, i.e. the angle between the antenna boresight and the illuminated object 15, and

$$\phi_0 = \frac{2\pi R_0}{\lambda}$$

where $R_0$ is the average distance between the antenna and the illuminated object 15, and $\lambda$ is the radar signal wavelength.

The combined antenna beam 13 is reflected by the illuminated object 15 and the antenna beam reflections are detected by the antenna elements $P_1$ and $P_2$. The antenna beam reflections are measured by the antenna receiver 8 as two separately measured radar signals $S_{P_1}$ and $S_{P_2}$, where $S_{P_1}$ may be regarded as a first measured radar signal received by the radar system on a channel $P_1$ and $S_{P_2}$ as a second measured radar signal received on a channel $P_2$. The first and second measured radar signals $S_{P_1}$ and $S_{P_2}$ are given by the expressions:

$$S_{P_1} = A_1(\theta)\cdot A_{12}(\theta)\cdot\exp\left(j\frac{\pi\Delta P\sin(\theta)}{\lambda} + j2\phi_0\right) \qquad\qquad (\text{Eq.2})$$

$$S_{P_2} = A_2(\theta) \cdot A_{12}(\theta) \cdot \exp\left(-j\frac{\pi\Delta P \sin(\theta)}{\lambda} + j2\phi_0\right) \qquad \text{(Eq.3)}$$

where $A_1(\theta)$ and $A_2(\theta)$ are the antenna gains of the respective antenna elements $P_1$ and $P_2$.

The radar receiver 8 is connected to a calculation unit 10 which is adapted to combine the measured radar signals $S_{P_1}$ and $S_{P_2}$ received on each channel by calculating a sum signal $S_\Sigma$ as $S_{P_1} + S_{P_2}$ and a difference signal $S_\Delta$ as $S_{P_1} - S_{P_2}$. The calculation unit 10 may as well be integrated in the antenna receiver 8 and form a part thereof. The sum signal and the difference signal are given by the expressions:

$$S_\Sigma = A_{12}(\theta) \cdot \exp(j2\phi_0) \cdot \left[A_1(\theta) \cdot \exp\left(j\frac{\pi\Delta P \sin(\theta)}{\lambda}\right) + A_2(\theta) \cdot \exp\left(-j\frac{\pi\Delta P \sin(\theta)}{\lambda}\right)\right] \qquad \text{(Eq. 4)}$$

$$S_\Delta = A_{12}(\theta) \cdot \exp(j2\phi_0) \cdot \left[A_1(\theta) \cdot \exp\left(j\frac{\pi\Delta P \sin(\theta)}{\lambda}\right) - A_2(\theta) \cdot \exp\left(-j\frac{\pi\Delta P \sin(\theta)}{\lambda}\right)\right] \qquad \text{(Eq. 5)}$$

The calculation unit 10 is further adapted to calculate an antenna pointing error signal $\varepsilon_1$ based on the first and second measured radar signals $S_{P_1}$ and $S_{P_2}$. The antenna pointing error signal $\varepsilon_1$ may be calculated as the ratio between the difference signal $S_\Delta$ and the sum signal $S_\Sigma$ and hence be given by the expression:

$$\varepsilon_1 = S_\Delta / S_\Sigma = .... = \frac{A_1^2(\theta) - A_2^2(\theta) + j2A_1(\theta)A_2(\theta)\sin\left(\frac{2\pi\Delta P \sin(\theta)}{\lambda}\right)}{A_1^2(\theta) + A_2^2(\theta) + 2A_1(\theta)A_2(\theta)\cos\left(\frac{2\pi\Delta P \sin(\theta)}{\lambda}\right)} \qquad \text{(Eq. 6)}$$

Information relating to the antenna pointing error may be found in any or both the real and imaginary parts of the complex ratio $S_\Delta / S_\Sigma$, and the above ratio for forming the antenna pointing error signal $\varepsilon_1$ may refer to only the real part of the ratio, only the imaginary part of the ratio, or the complex ratio, depending on whether amplitude monopulse or phase monopulse is utilized.

Measuring the angular positions of objects using an antenna pointing error signal $\varepsilon_1$ calculated as described above forms the basis for surveillance radar applications in scanning monopulse radar systems according to prior art. As described in the background portion, conventional Monopulse Beam Sharpening (MBS) uses the antenna pointing error and recalculates the sum signal $S_\Sigma$ as a function of corrected antenna angle instead of measured antenna angle. In Fig. 1 described in the background portion and illustrating the result of a simulated monopulse radar scan over five point-shaped objects located at the same distance from the radar system but separated in angle, the signal denoted by reference numeral 1 represents the sum signal $S_\Sigma$ as a function of measured antenna angle, whereas the signal denoted by reference numeral 3 is the MBS-processed signal formed by taking the corrected antenna angles into account.

When in the following describing the method of angular focusing through adapted filtering in scanning monopulse radar systems, the measured radar signals $S_{P_1}$ and $S_{P_2}$ have been obtained during simulation using the same simulation settings. That is, the measured radar signals $S_{P_1}$ and $S_{P_2}$ are the signals received on the respective channel $P_1$ and $P_2$ as a result of a radar scan over five point-shaped objects located at the same distance from the radar system but separated in angle.

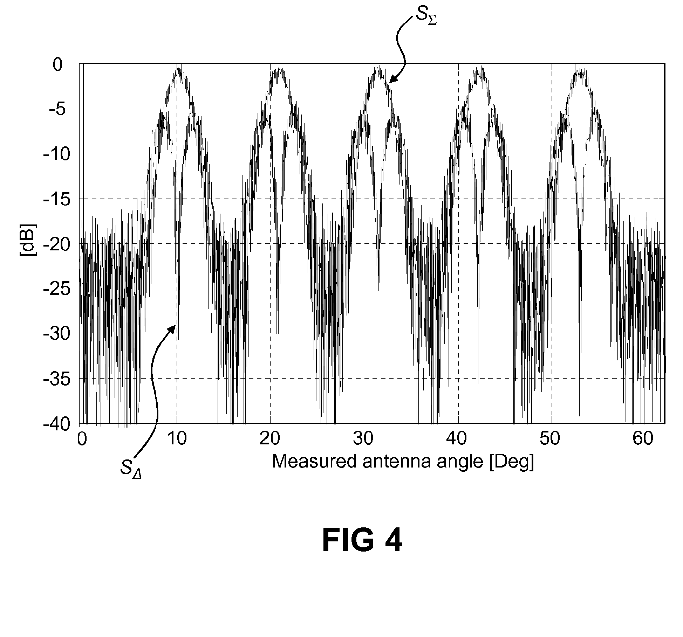

Fig. 4 illustrates the sum signal $S_\Sigma$ and the difference signal $S_\Delta$ from the simulation, calculated based on the first measured radar signal $S_{P_1}$ and the second measured radar signal $S_{P_2}$ in accordance with equations 4 and 5. In this simulation, each object has been assigned a maximal one pulse Signal to Noise Ratio (SNR) of 20 dB.

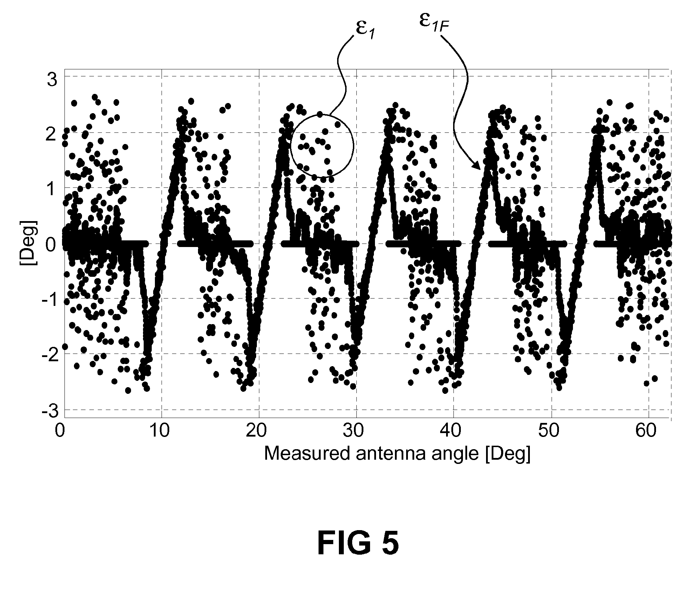

Fig. 5 illustrates the antenna pointing error signal $\varepsilon_1$ calculated as the ratio of the difference signal $S_\Delta$ and the sum signal $S_\Sigma$ illustrated in Fig. 4, in accordance with equation 6. The antenna pointing error signal $\varepsilon_1$ is here seen to be a discrete signal indicative of the antenna pointing error (in degrees) for a plurality of antenna angles. Preferably, the antenna pointing error signal $\varepsilon_1$ is then filtered using an average forming filter of low order, such as a Finite Impulse Response (FIR) filter, to obtain a filtered antenna pointing error signal $\varepsilon_{1F}$, which filtered antenna pointing error signal $\varepsilon_{1F}$ is also illustrated in Fig. 5. The filtering is advantageous in that it reduces undesired fluctuations in the antenna pointing error signal $\varepsilon_1$ The angular displacement that typically occurs due to filtering of the antenna pointing error signal $\varepsilon_1$ may be compensated for by a filtering in both directions. As seen in Fig. 5, the filtered antenna pointing error signal

$\varepsilon_{1F}$ is a linearly varying function within the beam width of the combined antenna beam 13 (see Fig. 2). Importantly, the slope of the filtered antenna pointing error signal $\varepsilon_{1F}$ remains constant also when the signal level for the illuminated object is changed.

To enable angular focusing through adapted filtering, an updated radar signal $S_{U1}$ is calculated based on the measured radar signals $S_{P_1}$, $S_{P_2}$ measured by the scanning radar system and the antenna pointing error signal $\varepsilon_1$. In a scanning monopulse radar system, the updated radar signal $S_{U1}$ is calculated based on the sum signal $S_\Sigma$ and the antenna pointing error signal $\varepsilon_1$, preferably after filtering the antenna pointing error signal. The updated radar signal $S_{U1}$ may, for example, be calculated according to the formula:

$$ S_{U1} = \left| S_\Sigma \right| \cdot \exp\left( j \cdot \varepsilon_{1F_\Sigma} \right) \tag{Eq. 7} $$

where $|S_\Sigma|$ is the amplitude of the sum signal $S_\Sigma$ and $\varepsilon_{1F_\Sigma}$ is a generated phase term which corresponds to the cumulative sum of the filtered antenna pointing error signal $\varepsilon_{1F}$ illustrated in Fig. 5.

The result of the above calculation is an updated radar signal $S_{U1}$ which includes a phase term $\varepsilon_{1F_\Sigma}$ carrying information about the true angle to the point from which the measured radar signals $S_{P_1}$, $S_{P_2}$ emanates, i.e. to the illuminated object, for all antenna angles at which measurements are performed. When scanning an object with the monopulse radar, the generated phase term $\varepsilon_{1F_\Sigma}$ of the updated radar signal $S_{U1}$ will be parabolic within the beam width of the combined antenna lobe 13 (see Fig. 2). The derivative of the generated phase term $\varepsilon_{1F_\Sigma}$ can be said to be a fictive frequency of the updated radar *signal $S_{U1}$* which fictive frequency will vary as a function of antenna angle in a manner corresponding to the filtered antenna pointing error $\varepsilon_{1F}$. Thus, the updated radar signal $S_{U1}$ will have a well known (fictive) frequency variation which in turn provides for enhanced angular focusing through adapted filtering since a signal adapted filter tailored for the known frequency variation can be used.

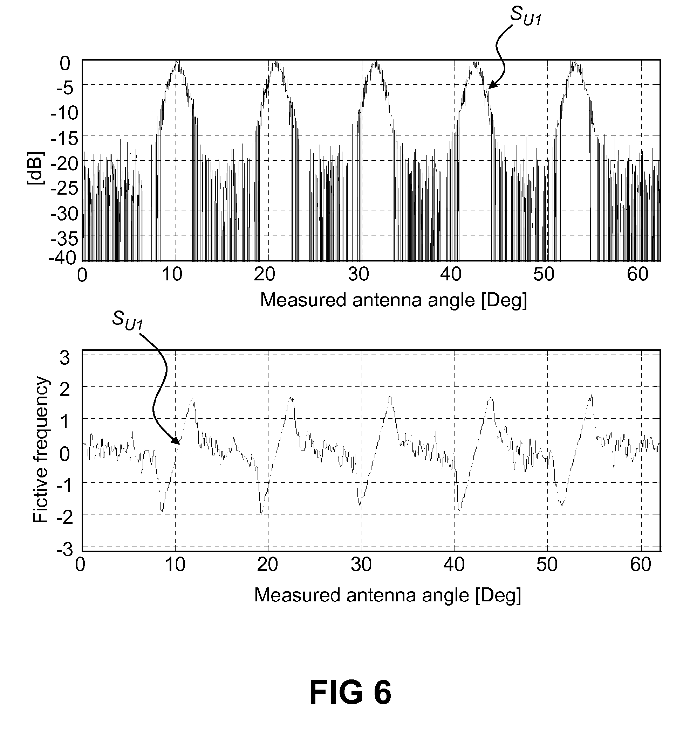

In Fig. 6, the amplitude of the updated radar signal $S_{U1}$ as a function of antenna angle is plotted in the upper diagram, whereas the lower diagram illustrates said fictive frequency of the updated radar signal $S_{U1}$ as a function of antenna angle. From a comparison between the lower diagram in Fig. 6 and the diagram in Fig. 5 it can be seen that the fictive frequency of the updated radar signal $S_{U1}$ corresponds well to the filtered antenna pointing error signal $\varepsilon_{1F}$.

A critical aspect of angular focusing through adapted filtering is to calculate a filter having a frequency characteristics corresponding to the fictive frequency characteristics of the updated radar signal. As will be described below, there are several ways in which a suitable filter can be calculated. Furthermore, filtering can be performed in either the time domain or the frequency domain.

Monopulse Focusing in Time Domain

According to a first example in which filtering takes place in the time domain, a filter $h_1$ is calculated using known characteristics of the antenna of the radar system. More particularly, the filter $h_1$ is created based on the known antenna beam pattern, which pattern can be represented by an antenna diagram as well known in the art.

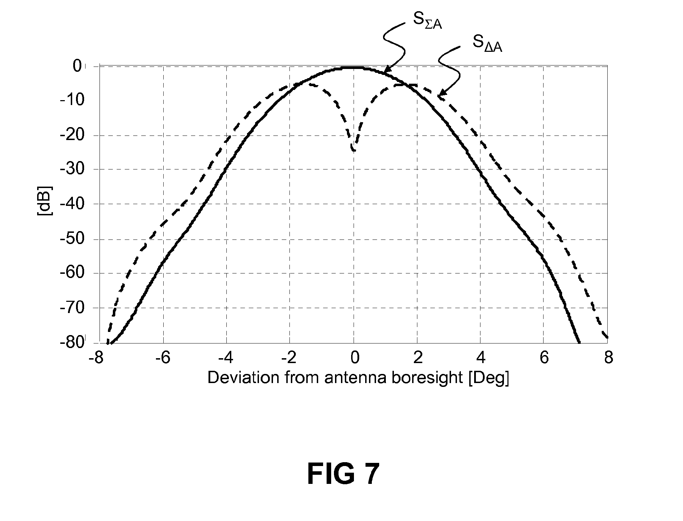

Fig. 7 illustrates the antenna diagram of the monopulse radar antenna used in this particular simulation. The antenna diagram illustrates an antenna sum signal $S_{\Sigma A}$ and an antenna difference signal $S_{\Delta A}$ indicating the sum and the difference of the signal power transmitted by the respective antenna element $P_1$ and $P_2$ as a function of angular deviation from the antenna boresight, i.e. as a function of the antenna pointing error. The antenna diagram is closely related to the sum signal $S_\Sigma$ and difference signal $S_\Delta$ formed from the measured radar signals $S_{P1}$, $S_{P2}$, illustrated in Fig. 4, and can be used to design a filter $h_1$ having a frequency variation corresponding to the fictive frequency variation of the updated radar signal $S_{U1}$. It should be noted that the antenna characteristics is known prior to use of the scanning monopulse radar system and that the filter $h_1$ hence can be pre-defined and stored for later use during radar measurements. To create the filter $h_1$, an antenna phase term $\varepsilon_{1A_\Sigma}$

reflecting the characteristics of the generated phase term $\varepsilon_{1F_\Sigma}$ (see equation E7) of the updated radar signal $S_{U1}$ is calculated. This is achieved by first calculating a theoretical antenna pointing error signal $\varepsilon_{1A}$ as the ratio between the antenna difference signal $S_{\Delta A}$ and the antenna sum signal $S_{\Sigma A}$, and then calculating the antenna phase term $\varepsilon_{1A_\Sigma}$ as the cumulative sum of the theoretical antenna pointing error signal $\varepsilon_{1A}$. The filter $h_1$ is then calculated according to the formula:

$$ h_1(t) = \left| S_{\Sigma A} \right| \cdot \exp\left( j \cdot \varepsilon_{1A_\Sigma} \right) \tag{Eq. 8} $$

where $|S_{\Sigma A}|$ corresponds to the amplitude of the antenna sum signal $S_{\Sigma A}$ and $\varepsilon_{1A_\Sigma}$ is the antenna phase term calculated as described above. In use, the filter width for $h_1$ is limited to +/- 4 Deg, which means that signal power outside this interval will be filtered out and hence not be subjected to angular focusing. In equation 8, $|S_{\Sigma A}|$ can be said to constitute an amplitude weighting function which may be exchanged for other types of weighting functions, such as a Taylor or Hamming weighting function.

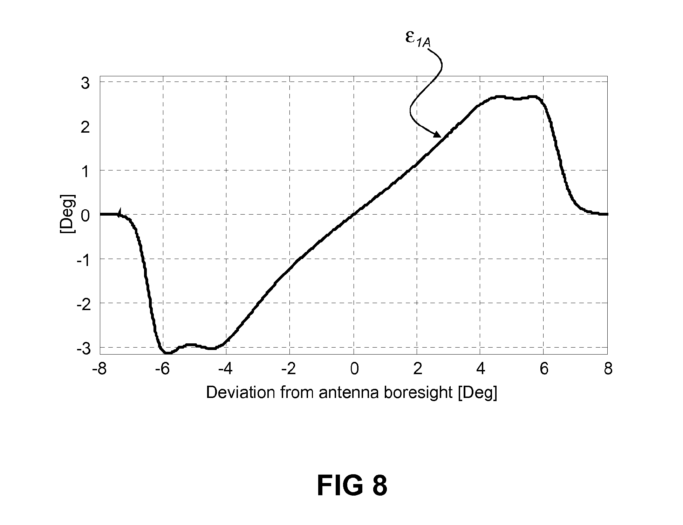

Fig. 8 illustrates the theoretical antenna pointing error signal $\varepsilon_{1A}$ derived from the antenna diagram as explained above. As seen in Fig. 8, the signal is substantially linear in the interval +/- 4 Deg, which is the relevant angular range in this exemplary embodiment. This interval of +/- 4 Deg may also be referred to as the width of the monopulse discriminator.

As understood by a person skilled in the art, the filter $h_1$ should also be adapted to the updated sum signal $S_{U1}$ with regard to sample density. Therefore, the radar pulse repetition frequency and the scanning frequency of the radar system antenna have to be known.

With the filter $h_1$ and the updated radar signal $S_{U1}$ available, the updated radar signal $S_{U1}$ is focused, or compressed, by filtering it using the filter $h_1$ to obtain a focused radar signal $S_{F1}$ which can be used for determining the angular position of the illuminated object or objects, for example for the purpose of generating a radar image. Thus, the focused radar signal $S_{F1}$ can be formed by time domain filtering the updated radar *signal* $S_{U1}$ using the filter $h_1$ according to the formula:

$$ S_{F1}(t) = S_{U1}(t) * h_1(t) \qquad \text{(Eq. 9)} $$

The result of the above described method for angular focusing through adapted filtering in monopulse radar systems is hence the focused radar signal $S_{F1}$, which in this exemplary embodiment is formed by convolution of the updated radar signal $S_{U1}$ and the filter $h_1$ in the time domain.

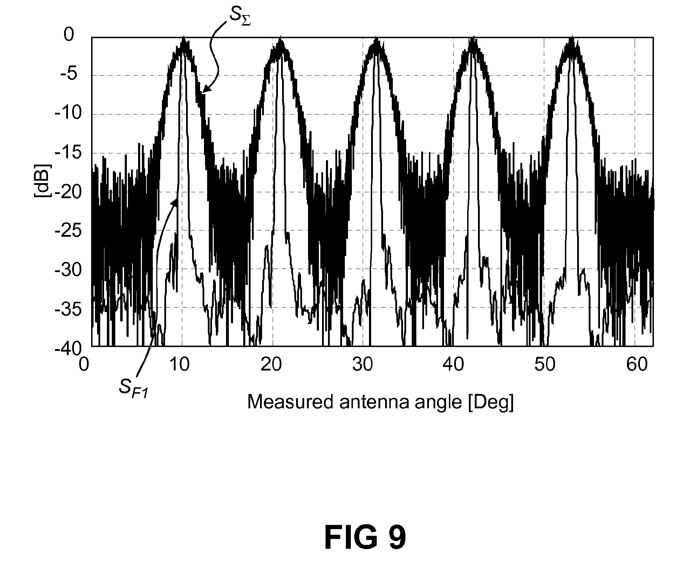

Fig. 9 illustrates a comparison between the focused radar signal $S_{F1}$ and the sum signal $S_{\Sigma}$ calculated during a simulation in which each of the five point-shaped objects was assigned a maximal one pulse SNR of 20 dB. As is evident from the diagram, angular focusing through adapted filtering offers a powerful focusing of the sum signal.

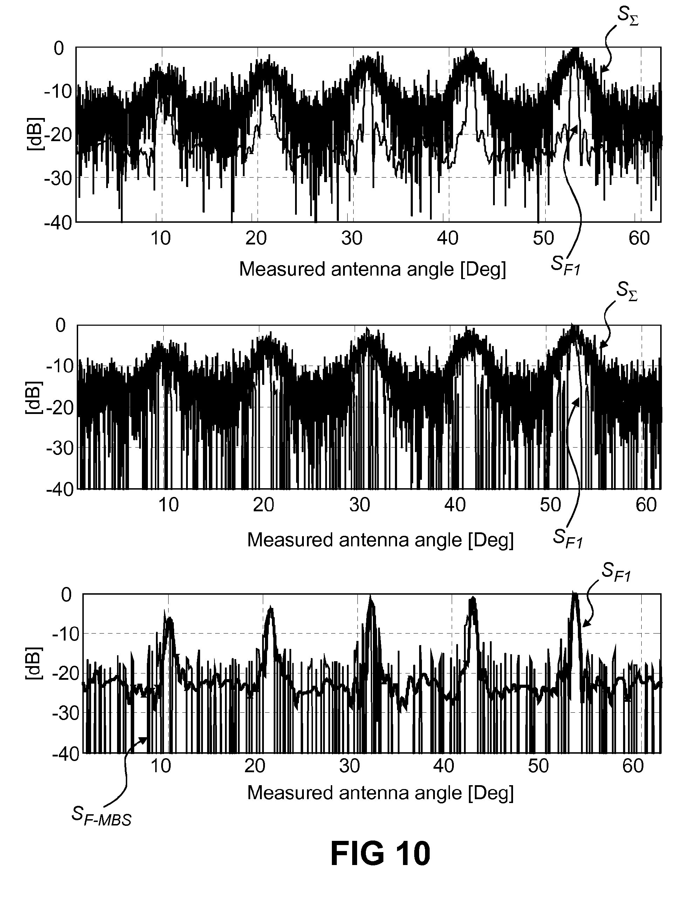

In Fig. 10 the top diagram illustrates a comparison between the focused radar signal $S_{F1}$ resulting from the angular focusing though adapted filtering described above and the sum signal $S_{\Sigma}$, calculated during a simulation in which the five point-shaped objects were assigned a maximal one pulse SNR between 5 and 10 dB. From this diagram, it is clear that angular focusing through adapted filtering offers a high degree of focusing also for objects with very low one pulse SNR (< 10 dB). The middle diagram illustrates a comparison between a focused radar signal $S_{F-MBS}$ resulting from angular focusing through conventional MBS and the sum signal $S_{\Sigma}$, calculated during a corresponding simulation. The focused radar signal $S_{F-MBS}$ hence corresponds to the MBS-processed signal denoted by reference numeral 3 in the bottom diagram of Fig. 1. The bottom diagram in Fig. 10 illustrates a comparison between the focused radar signal $S_{F1}$ in the top diagram and the focused radar signal $S_{F-MBS}$ in the middle diagram. From this comparison it is evident that the proposed technique of angular focusing through adapted filtering resulting in the focused radar signal $S_{F1}$ offers efficient focusing with a substantial reduction in noise level compared to conventional MBS.

Monopulse Focusing in Frequency Domain

As previously mentioned, the filtering of the updated radar signal may also be performed in the frequency domain. As will be seen, the results will be similar no matter in which domain the filtering is performed. However, filtering in the time domain requires more computational power and, therefore, filtering in the frequency domain is preferred.

According to a first exemplary way of performing monopulse focusing in the frequency domain, the signal adapted filter $h_1$ calculated in accordance with equation 8 is used. First the filter signal $h_1$ and the updated radar signal $S_{U1}$ is transformed to the frequency domain by a discrete Fourier transform (DFT). In practice, the transformation is preferably performed using a fast Fourier transform (FFT). As understood by the skilled person, the size of the filter $h_1$ may have to be adapted to correspond to the size of the updated radar signal $S_{U1}$ during FFT, for example by means of zero filling.

Focusing of the updated radar signal $S_{U1}$ is thereafter achieved by forming the focused radar signal $S_{F1}$ using the formula:

$$ S_{F1}(\omega) = S_{U1}(\omega) \cdot H_1^*(\omega) \qquad \text{(Eq. 10)} $$

where $S_{U1}(\omega)$ and $H_1(\omega)$ are the Fourier transforms of the time domain representations of the updated radar signal $S_{U1}$

and the filter $h_1$, respectively, and $H_1^*(\omega)$ is the complex conjugate of $H_1(\omega)$.

Preferably, the filtering in equation 10 is performed using amplitude weighting to further reduce the signal contribution from antenna sidelobes. Any suitable amplitude weighting function $A_1$ may be employed, for example a Taylor or Hamming weighting function. To complete the focusing procedure the focused radar signal $S_{F1}$ is then transformed back to the time domain by performing an inverse Fourier transform, typically an inverse FFT (IFFT). Thus, an exemplary way of performing monopulse focusing in the frequency domain is to calculate the focused radar signal $S_{F1}$ as:

$$S_{F1}(t) = IFFT\big((FFT(S_{U1}(t)) \cdot FFT(h_1^*(t) \cdot A_1(t))\big) \qquad \text{(Eq. 11)}$$

where $h_1^*(t)$ is the complex conjugate of the time domain representation of the filter $h_1$, and $A(t)$ is the time domain representation of the weighting function $A_1$. In equation 11, it should be understood that the amplitude weighting function $A_1$ should only be used if amplitude weighting was not used when forming the filter $h_1$. That is, if the filter $h_1$ is calculated in accordance with equation 8 in which $|S_{\Sigma A}|$ serves as a weighting function, the weighting function $A_1$ should be left out of equation 11.

Calculating the focused radar signal $S_{F1}$ in accordance with equation 11 yields a result which is very similar to the result illustrated in Figs. 9 and 10, in which filtering was performed in the time domain.

According to a second exemplary way of performing monopulse focusing in the frequency domain, another filter $h_2$ is created in order to establish a relationship between the phase information generated by the illuminated objects and the antenna angle measured by the radar system. The establishment of such a relationship is rendered possible by forming the filter $h_2$ as a "reference filter signal" characterized by a frequency term which varies linearly within the interval $-\pi$ to $\pi$ radians over the entire antenna angle range in which measurements are performed. To form a filter $h_2$ having the desired characteristics, the filter is preferably calculated according to the formula:

$$h_2(t) = \exp(j \cdot \varepsilon_{R_\Sigma}) \qquad \text{(Eq. 12)}$$

where $\varepsilon_{R_\Sigma}$ corresponds to the cumulative sum of a generated reference frequency term $\varepsilon_R$, which generated reference frequency term is a vector characterized by a linear growth between $-\pi$ and $+\pi$.

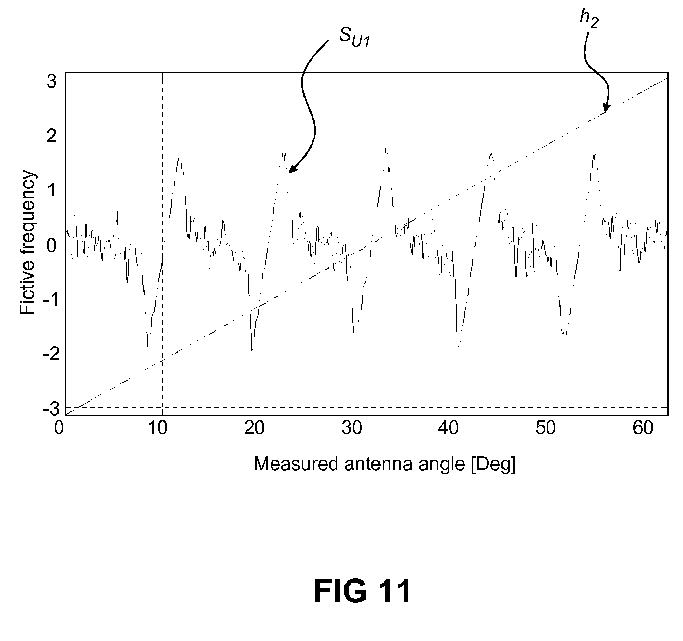

Fig. 11 illustrates the fictive frequency variation of the filter signal $h_2$ and the updated radar signal $S_{U1}$ calculated in accordance with equation 7.

To enable filtering, the slope (i.e. the derivative) of the fictive frequency of the updated radar signal should correspond to that of the filter $h_2$. Therefore, in this exemplary way of monopulse focusing in the frequency domain, the updated radar signal is not calculated using equation 7. Instead, an updated radar signal $S_{U2}$ having a frequency slope corresponding to that of the filter $h_2$ is calculated using the formula:

$$S_{U2} = |S_\Sigma| \cdot \exp(j \cdot \varepsilon_{1FK_\Sigma}) \qquad \text{(Eq. 13)}$$

where $\varepsilon_{1FK_\Sigma}$ corresponds to the cumulative sum of the filtered antenna pointing error $\varepsilon_{1F}$ multiplied with a correction factor $K$ , *where K is defined as K = slope($\varepsilon_R$)/slope($\varepsilon_{1F}$)* (within the angular range in which the *slope($\varepsilon_R$)* is substantially constant). This correction means that the slope of the filtered antenna pointing error signal $\varepsilon_{1F}$ is adjusted with the correction factor K. This adjustment can be understood as a tuning of the function, which tuning is performed only once.

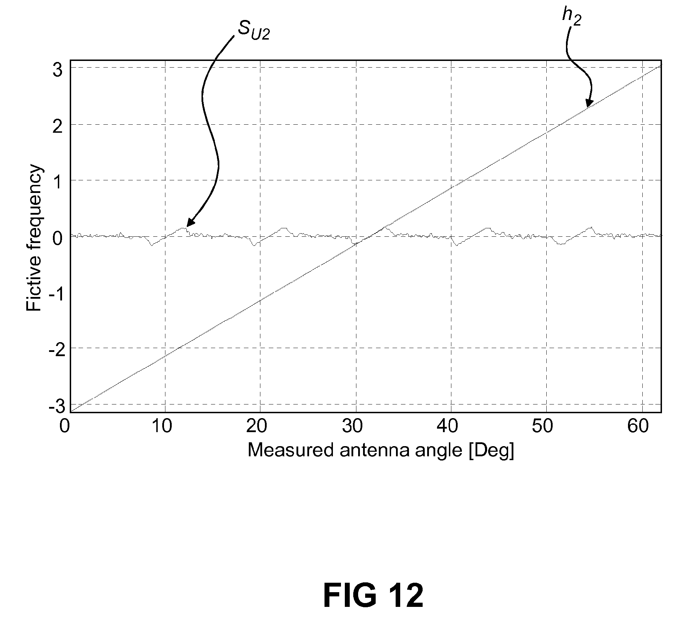

Fig. 12 illustrates the fictive frequencies of the filter $h_2$ and the updated radar signal $S_{U2}$ calculated according to equation 13. As seen in Fig. 12, calculating the updated radar signal using the correction *factor K* gives the updated radar signal $S_{U2}$ a frequency slope corresponding to that of the filter $h_2$, which makes the filter $h_2$ suitable for compressing the updated radar signal $S_{U2}$ to obtain a focused radar signal $S_{F2}$.

Similar to the filtering step performed in equation 10, the updated radar signal $S_{U2}$ is then focused/compressed using the filter $h_2$. The filtering may be performed in the frequency domain by calculating a focused radar signal $S_{F2}$ by means of a FFT according to the formula:

$$S_{F2}(\omega) = S_{U2}(\omega) \cdot H_2^*(\omega) \qquad\qquad \text{(Eq.14)}$$

where $S_{U2}(\omega)$ and $H_2(\omega)$ are the Fourier transforms of the time domain representations of the updated radar signal $S_{U2}$ and the filter $h_2$, respectively, and $H_2^*(\omega)$ is the complex conjugate of $H_2(\omega)$.

To complete the focusing procedure the focused radar signal $S_{F2}$ is then transformed back to the time domain by an inverse Fourier transform, such as an inverse FFT. The result of the processing is a powerful focusing of the signal, having a considerably improved SNR.

In order to further improve the results, an amplitude weighting function $A_2$ may be used, such as a Taylor or Hamming weighting function. The focused radar signal $S_{F2}$ may hence also be calculated in the frequency domain as:

$$S_{F2}(\omega) = S_{U2}(\omega) \cdot H_2^*(\omega) \cdot A_2(\omega) \qquad\qquad \text{(Eq. 15)}$$

where $A_2(\omega)$ is the frequency domain representation of the weighting function $A_2$.

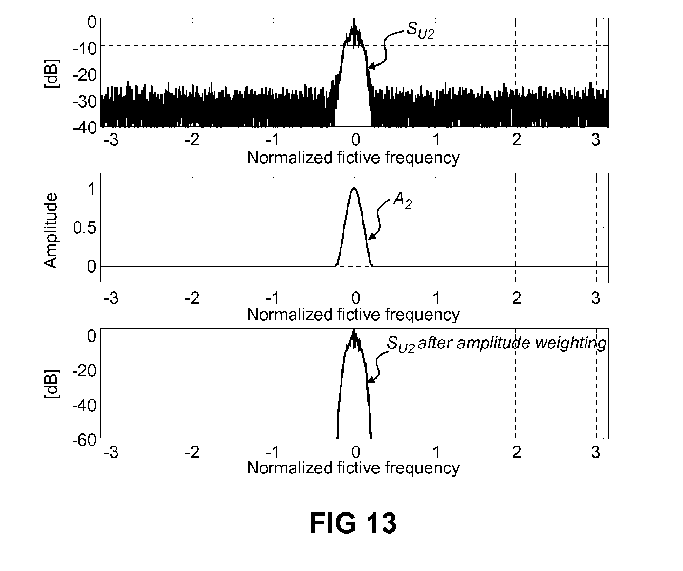

Fig. 13 illustrates the updated radar signal $S_{U2}$, the exemplary amplitude weighting function $A_2$ used in this particular simulation, and the amplitude weighted updated radar signal being the result of the operation $H_2^*(\omega) \cdot A_2(\omega)$. In this simulation the weighting function $A_2$ used was a Taylor weighting function which was adapted to have a width corresponding to the signal extent of the updated radar signal $S_{U2}$.

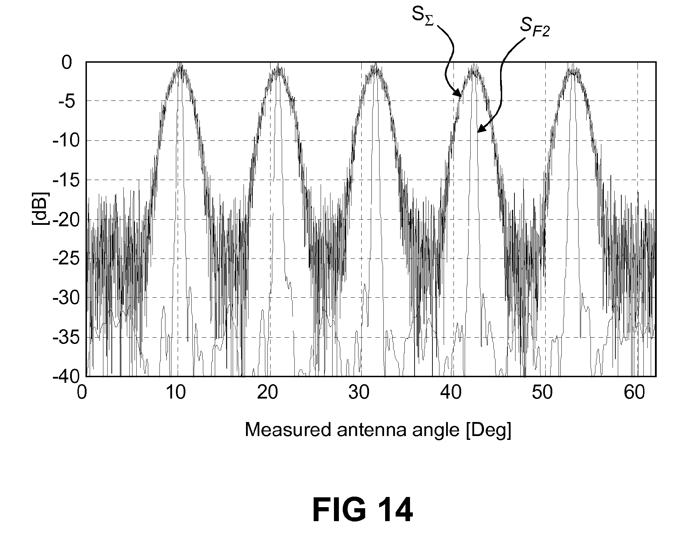

Fig. 14 illustrates a comparison between the focused radar signal $S_{F2}$ and the sum signal $S_\Sigma$ when the focused radar signal $S_{F2}$ is calculated in the frequency domain in accordance with equation 15. A comparison between Fig. 14 and Fig. 9, which illustrates a comparison between the focused radar signal $S_{F1}$ and the sum signal $S_\Sigma$ when the focused radar signal $S_{F1}$ is calculated in the time domain in accordance with equation 9, shows that the result of calculating a focused radar signal in the frequency domain using amplitude weighting is very similar to the result of calculating a focused radar signal in the time domain.

The amplitude weighting in the above described exemplary ways of performing monopulse focusing in the frequency domain has the effect of reducing signal noise and the influence of antenna sidelobes. Without amplitude weighting, undesired sidelobes may occur on both sides of the objects (i.e. on both sides of the power peaks of the focused radar signal). Furthermore, the amplitude weighting only results in a marginal increase in width of the focused objects. Consequently, amplitude weighting results in an improved monopulse focusing and in a reduction of the signal noise level. The noise level reduction also provides for improved ability to detect objects which are fully or partly hidden in the noise.

Non-Monopulse Focusing

Above, angular focusing through adapted filtering in scanning monopulse radar systems has been described. In such systems, radar reflections from an object are measured as at least two radar signals $S_{P1}$, $S_{P2}$ received on a respective channel $P_1$, $P_2$ of the radar system. Thus, a sum signal $S_\Sigma$ and a difference signal $S_\Delta$ can easily be formed by summation and subtraction of the respective radar signals $S_{P1}$, $S_{P2}$. In a scanning non-monopulse radar system not using a monopulse antenna, however, radar reflections may give rise only to a single measured radar signal $S_P$. Nevertheless, it has been shown that information relating to an antenna pointing error $\varepsilon_2$, which information hence is indicative of the true angle to an illuminated object, can be derived for measured antenna angles in a way similar to the way the antenna pointing error $\varepsilon_1$ is calculated in a monopulse radar system (see equation 6 above), also in a non-monopulse radar system.

For example, US Patent No. 7 236 125 describes a method for determining an angle correction value (i.e. an antenna pointing error) for a measured antenna angle, which method is applicable also to radar system utilizing a single channel on which a single radar signal is received. The idea of the method presented in the above mentioned document is to allow conventional MBS to be used also in non-monopulse radar systems.

The method utilizes the fact that the measured radar signal as a function of antenna angle is a smooth, parabolic function which is symmetric about a local maximum at which the tangent is horizontal. The method further uses measured data to determine, for each antenna angle at which measurements are performed, a local maximum, and concentrates the energy of the measured radar signal to the local maximum.

Typically, the method is performed by determining a function which mathematically represents the measured radar signal, such as a second-order polynomial or a trigonometric function, which function is a good approximation of the measured radar signal, at least close to the local maximum. This may be achieved e.g. by curve fitting a mathematical function to the measured power values, for example by means of least-square methods. Once a mathematical function is determined for the measured radar signal, a derivative (or partial derivative) of the radar signal with respect to antenna angle can be determined, e.g. by means of automatic numerical differentiation.

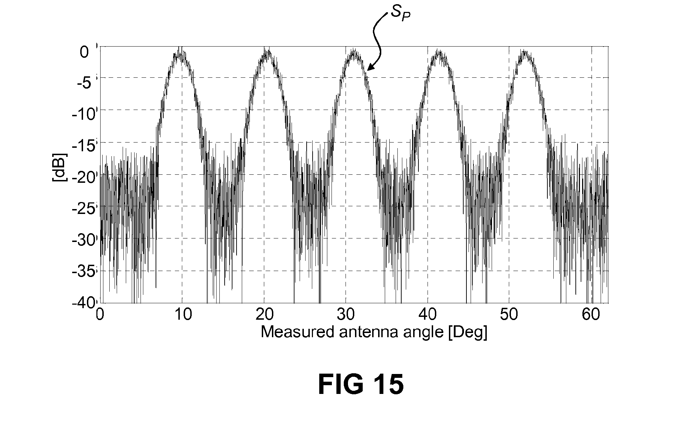

Fig. 15 illustrates a radar signal $S_P$ measured during a simulation in which the radar signal $S_P$ is the signal measured by a single antenna element in a non-monopulse radar system in response to a radar scan over five point-shaped objects located at the same distance from the radar system but separated in angle, wherein each object has been assigned a maximal one pulse SNR of 20 dB.

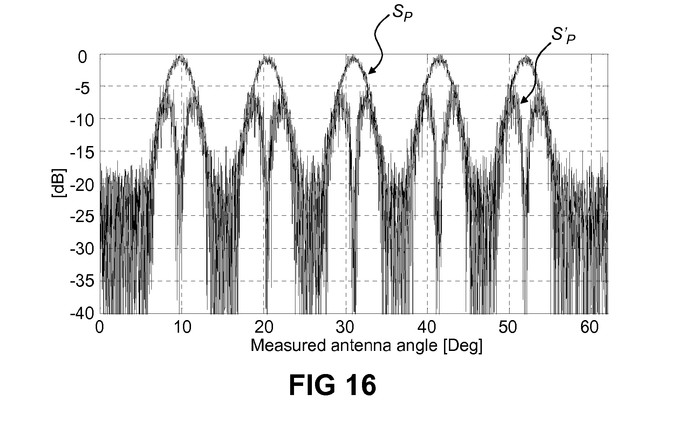

Fig. 16 illustrates the radar signal $S_P$ and a signal $S'_P$ being an approximation of the first derivative of the radar signal $S_P$, obtained during the same simulation. As is clear from a comparison between Fig. 16 and Fig. 4, the radar signal $S_P$ and its derivative signal $S_P$ very much resemble the sum signal $S_\Sigma$ and the difference signal $S_\Delta$ directly derivable from the measured radar signals $S_{P1}$, $S_{P2}$ in a monopulse radar system through equations 4 and 5. That the derivative of the sum signal, or in this instance, the derivative $S'_P$ of a single measured radar signal $S_P$, resembles the difference signal $S_\Delta$ obtainable in a monopulse radar system is further discussed in "Handbook of Radar Measurement" by Barton and Ward, ISBN 0-89006-155-6, Artech House, 1984 (p. 19). Just like the ratio between the difference signal $S_\Delta$ and the sum signal $S_\Sigma$, the ratio between the derivative $S'_P$ of the measured radar signal and the measured radar signal $S_P$ itself has been found to be indicative of the antenna pointing error $\varepsilon_2$, which hence may be calculated in a non-monopulse radar system for example using the formula:

$$\varepsilon_2 = \frac{S'_P}{S_P} \qquad\qquad \text{(Eq. 16)}$$

where $S'_P$ is the first derivative of the measured radar signal $S_P$ with respect to antenna angle or any other physical entity having a known relationship to the measured antenna angle, such as time.

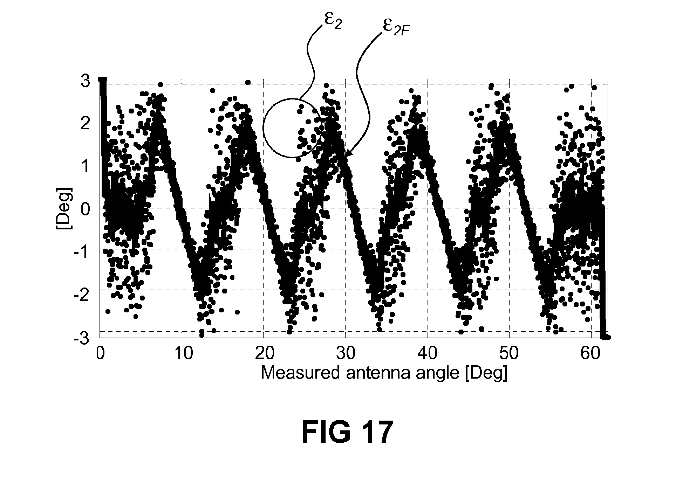

Fig. 17 illustrates the antenna pointing error signal $\varepsilon_2$ calculated in accordance with equation 16, and a filtered antenna pointing error signal $\varepsilon_{2F}$ obtained by filtering the antenna pointing error signal $\varepsilon_2$ using an average forming filter of low order, such as a FIR filter. As is clear from a comparison between Fig. 17 and Fig. 5, the antenna pointing error $\varepsilon_2$ calculated for a non-monopulse radar system is very similar to the antenna pointing error $\varepsilon_1$ calculated for a monopulse radar system in identical conditions. In this particular case, it can be seen that the antenna pointing error signal $\varepsilon_2$ in Fig. 17 appears to be a mirror-inverted with respect to the antenna pointing error signal $\varepsilon_1$ in Fig. 5. However, whether the shape of the antenna pointing error signal $\varepsilon_2$ will or will not be mirror-inverted with respect to the shape of the antenna pointing error signal $\varepsilon_1$ is only a question of how the difference signal $S_\Delta$ is defined in the monopulse radar system, i.e. which signal is subtracted from which when forming the difference signal $S_\Delta$ from the measured radar signals $S_{P1}$ and $S_{P2}$ according to equation 5.

Once the antenna pointing error $\varepsilon_2$ has been calculated in accordance with equation 16, any of the methods described above with reference to Monopulse Focusing can be employed to create a focused radar signal through adapted filtering. Thus, the above described principle of determining the antenna pointing error signal $\varepsilon_2$ allows the proposed way of angular focusing through adapted filtering to be used also in non-monopulse radar systems.

In accordance with the principles of monopulse focusing described in the previous section, this is achieved by first calculating an updated radar signal including a phase term carrying information about the true angle to the point from which the measured radar signal $S_P$ emanates, for all antenna angles at which measurements are performed. If calculating an updated radar signal using equation 7 it should be noted that the sum signal $S_\Sigma$ in equation 7 should be replaced by the measured radar signal $S_P$ and that the generated phase term $\varepsilon_{1F_\Sigma}$ should be replaced by a corresponding phase term $\varepsilon_{2F_\Sigma}$ based on the filtered antenna pointing error $\varepsilon_{2F}$. Likewise, if calculating an updated radar signal using equation 13, the sum signal $S_\Sigma$ should be replaced by the measured radar signal $S_P$ and the phase term $s_{1FK\Sigma}$ should be replaced by a phase term $e_{2FK\Sigma}$ corresponding to the cumulative sum of the filtered antenna pointing error $\varepsilon_{2F}$ multiplied with a correction factor $K$ being defined as $K = slope(\varepsilon_R)/slope(\varepsilon_{2F})$. Thereafter, a focused radar signal $S_{F3}$ of the non-monopulse radar system can be calculated using any of the equations 10, 11, 14 or 15. If using equation 10 or 11, a skilled person will appreciate that calculation of the filter $h_1(t)$ (see equation 8) should be based on the antenna diagram of the antenna used by the non-monopulse radar system.

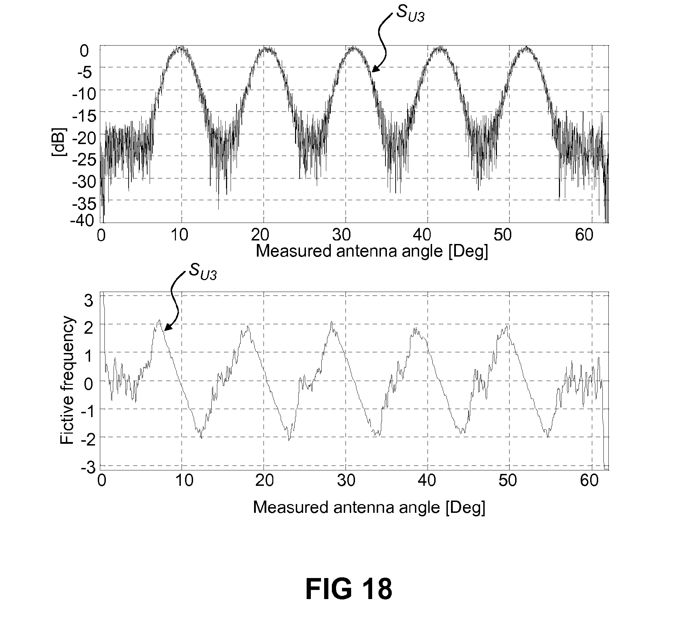

The upper diagram in Fig. 18 illustrates an updated radar signal $S_{U3}$ for the non-monopulse radar system, calculated in accordance with equation 7 when modified as described above. That is, the updated radar signal $S_{U3}$ in Fig. 18 is calculated as:

$$S_{U3} = |S_P| \cdot \exp\left(j \cdot \varepsilon_{2F_\Sigma}\right) \qquad\qquad \text{(Eq. 17)}$$

where $|S_P|$ is the amplitude of the measured radar signal $S_P$ and $\varepsilon_{2F\Sigma}$ is a generated phase term which corresponds to the cumulative sum of the filtered antenna pointing error signal $\varepsilon_{2F}$ illustrated in Fig. 17.

The lower diagram in Fig. 18 illustrates the fictive frequency of the updated radar signal $S_{U3}$. As is clear from a comparison between Fig. 18 and Fig. 6, the power and the fictive frequency of the updated radar signal $S_{U3}$ for the non-monopulse radar system are very similar to the power and the fictive frequency of the updated radar signal $S_{U1}$ for the monopulse radar system when calculated as described above in identical conditions.

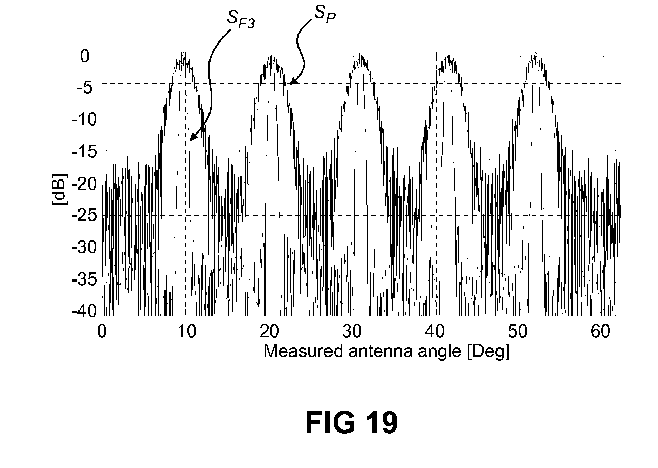

Fig. 19 illustrates a comparison between the measured radar signal $S_P$ and a focused radar signal $S_{F3}$ formed by filtering the updated radar signal $S_{U3}$ using a signal adapted filter $h_3$ according to:

$$S_{F3}(t) = S_{U3}(t) * h_3(t), \tag{Eq. 18}$$

where the time domain representation $h_3(t)$ of the filter $h_3$ is calculated based on the antenna diagram of the non-monopulse antenna. Similar to calculating an antenna pointing error $\varepsilon_2$ based on the measured radar signal $S_P$ and its derivative (see equation 16), a theoretical antenna pointing error $\varepsilon_{2A}$ can be calculated as a ratio between a known antenna signal $S_A$ describing the power transmitted by the non-monopulse antenna (or single-channel antenna) as a function of angular deviation from the antenna boresight (i.e. a signal describing the antenna beam pattern) and the derivative of said antenna signal $S_A$, which may be numerically determined through any method known in the art. This theoretical antenna pointing error $\varepsilon_{2A}$ can then be used to calculate said filter $h_3$ as:

$$h_3(t) = |S_A| \cdot \exp(j \cdot \varepsilon_{2A\Sigma}) \tag{Eq. 19}$$

where $|S_A|$ corresponds to the amplitude of the antenna *signal* $S_A$ and $\varepsilon_{2A\Sigma}$ is an antenna phase term corresponding to the cumulative sum of the theoretical antenna pointing error signal $\varepsilon_{2A}$.

As seen when comparing Fig. 19 with Figs. 9 and 14, effective angular focusing through adapted filtering is achieved also for non-monopulse systems.

In the above described embodiments, the signal adapted filter $h_1$ $h_2$, $h_3$ has been calculated based on the characteristics of the antenna of the radar system. However, an approximate signal adapted filter may also be calculated based on measured reference radar signals. A reference radar signal is a measured radar signal which is known by the radar system to be a reflection of a radar signal transmitted by the radar system and reflected by a "reference" object having known radar-reflective properties and located at a known position. For example, the scanning radar system according to the invention may comprise a dominating reference reflector object which is placed in the area illuminated by the at least one antenna beam and adapted to reflect the transmitted radar signals back towards the antenna. For example, the reference reflector object may be a corner reflector normally used for radar system calibration. The signal adapted filter can then be created based on the measured reference radar signal according to any of the available methods described in this document. Of course, the signal adapted filter may also be calculated based on combinations of known antenna characteristics and measured reference radar signals.

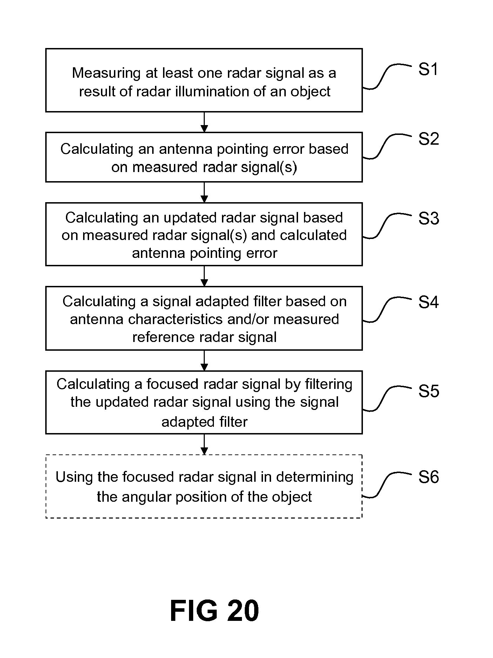

Fig. 20 illustrates the general principles of angular focusing through adapted filtering described herein. The method is performed by a scanning radar system adapted to transmit radar signals forming at least one antenna beam and to detect reflections of the at least one antenna beam caused by an object at a point of reflection. The scanning radar system comprises at least one antenna for transmitting and/or receiving the signals.

In a first step S1, at least one radar signal is measured as a function of antenna angle, which measured radar signal is indicative of the power of antenna beam reflections detected at a plurality of antenna angles. If the radar system is a monopulse radar system, the at least one measured radar signal corresponds to the measured radar signals which are herein referred to as $S_{P1}$ and $S_{P2}$, and if the radar system is a non-monopulse system, the at least one measured radar signal corresponds to the radar signal which is herein referred to as $S_P$.

In a second step S2, an antenna pointing error signal indicative of a deviation between the antenna angles and true angles to the point of reflection for the plurality of antenna beams is calculated. In a monopulse radar system this may be achieved by calculating an antenna pointing error signal $\varepsilon_1$ in accordance with equation 6 and in a non-monopulse radar system this may be achieved by calculating an antenna pointing error $\varepsilon_2$ in accordance with equation 16.

In a third step S3, an updated radar signal is calculated based on the at least one measured radar signal and the antenna pointing error signal formed in step S2, which updated radar signal carries information about the true angle to the point from which the at least one measured radar signal emanates, for all antenna angles at which measurements are performed. Preferably, the antenna pointing error signal is filtered before calculating the updated radar signal. In a monopulse radar system this may be achieved by calculating an updated radar signal $S_{U1}$ in accordance with equation 7 or an updated radar signal $S_{U2}$ in accordance with equation 13, and in a non-monopulse radar system this may be achieved by calculating an updated radar signal $S_{U3}$ in accordance with equation 17.

In a fourth step S4, a signal adapted filter is calculated based on the characteristics of the at least one antenna of the radar system and/or at least one reference radar signal measured by the radar system. In a monopulse radar system this may be achieved by calculating a filter $h_1$ in accordance with equation 8 or a filter $h_2$ in accordance with equation 12, and in a non-monopulse radar system this may be achieved by calculating a filter $h_3$ in accordance with equation 19.

In a fifth step S5, a focused radar signal is calculated by filtering the updated radar signal formed in step S3 using the signal adapted filter formed in step S4. In a monopulse radar system this may be achieved by calculating a focused radar signal $S_{F1}$ in accordance with any of the equations 9, 10 or 11 or a focused radar signal $S_{F2}$ in accordance with any of the equations 14 or 15, and in a non-monopulse radar system this may be achieved by calculating a focused radar signal $S_{F2}$ in accordance with equation 18.

Typically but not necessarily, the focused radar signal formed in step S5 is then used in determining at least the angular position of the illuminated object, i.e. the object reflecting the transmitted radar signals. This optional step is illustrated in a step S6.

The so determined angular position of the illuminated object may then be used for various purposes. For example, the angular position can be used by a radar image rendering unit of the radar system to automatically produce a radar image for display to an operator. It may also be used by a navigation control unit to automatically navigate a vehicle in which the radar system is included based on angular positions of nearby objects. Such a navigation control unit may for example form part of an autopilot system in a manned aircraft or unmanned aerial vehicle (UAV).

The order in which the method steps illustrated in Fig. 20 are presented should not be construed as a chronological order. As previously mentioned, when the signal adapted filter is calculated based on antenna characteristics, the step S4 is preferably performed prior to radar measurements, i.e. prior to step S1.

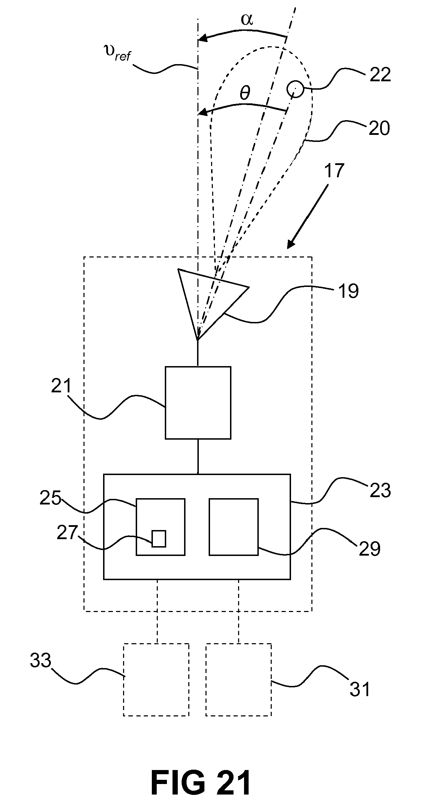

Fig. 21 illustrates schematically a scanning radar system 17 according to an exemplary embodiment of the invention. The radar system 17 may be a stationary radar system located on ground or a radar system located in a vehicle, such as an aircraft or a vessel. Furthermore, the scanning radar system 17 may be either a scanning monopulse radar system adapted to measure at least two different radar signals $SP_1$, $SP_2$ when receiving antenna beam reflections, or a scanning non-monopulse radar system measuring a single radar signal $S_P$ when receiving antenna beam reflections.

The radar system 17 comprises at least one scanning antenna 19 transmitting radar signals forming at least one antenna beam 20. The antenna 19 is rotated or swept along an angular direction and receives reflections of the at least one transmitted antenna beam 20 which are measured, by means of an antenna receiver 21, as at least one radar signal as a function of an antenna angle $\alpha$ which in the illustrated scenario is the angle between the antenna boresight and a reference direction $\upsilon_{ref}$. In the illustrated scenario, a radar-illuminated object 22 which may cause such reflections is positioned at a true angle $\theta$ from the reference direction $\upsilon_{ref}$. The radar system 17 further comprises a calculation unit 23 which processes the at least one measured radar signal according to pre-programmed instructions. The calculation unit 23 may also be integrated in the antenna receiver 21. The instructions are typically stored in a storage means 25 in form of a computer program 27 which, when executed by a processing means 29 of the calculation unit 23, such as a microprocessor or the like, causes the processing means 29 to perform angular focusing through adapted filtering by calculating a focused radar signal $S_{F1}$, $S_{F2}$, $S_{F2}$ based on the at least one measured radar signal and additionally also predefined characteristics of the at least one antenna 19, in accordance with any of the principles described herein. Thus, the calculation unit 23 is adapted to perform at least the method steps S2 to S5 described above with reference to Fig. 20. The calculation unit 23 may also be adapted to forward the focused radar signal or the angular positions of objects determined from said focused radar signal to various sub-systems which has an interest in knowing the angular positions of objects relative to the radar system. For example, the focused radar signal or the angular positions of objects determined from the focused radar signal may be forwarded to a radar image rendering unit 31 adapted to generate radar images based on the received information, or to a navigation control unit 33 of a vehicle, adapted to automatically navigate the vehicle based on the received information.

**Claims**

1. A method for angular focusing of signals in a scanning monopulse radar system (6) comprising at least one antenna (7) and at least two antenna elements ($P_1$, $P_2$), the radar system being adapted to transmit radar signals forming at least one antenna beam (9, 11) and to detect reflections of said at least one antenna beam caused by an object (15) at a point of reflection, comprising the steps of:

- measuring a first radar signal ($S_{P1}$) and a second radar signal ($S_{P2}$) as functions of antenna angle ($\alpha$), which first and second radar signals are indicative of the power of antenna beam reflections detected by the respective antenna element ($P_1$, $P_2$) at a plurality of antenna angles;

- forming from said first and second measured radar signals $(S_{P1}, S_{P2})$ a sum signal $(S_\Sigma)$ and a difference signal $(S_\Delta)$;
- calculating, using a ratio of said difference signal $(S_\Delta)$ and said sum signal $(S_\Sigma)$, an antenna pointing error signal $(\varepsilon_1)$ indicative of a deviation between the antenna angle $(\alpha)$ and the true angle $(\theta)$ to the point of reflection for said plurality of antenna angles;

**characterized by** the steps of:

- calculating an updated radar signal $(S_{U1} ; S_{U2})$ based on the amplitude of the sum signal $(S_\Sigma)$ and a generated phase term $(S_{1F_\Sigma})$ carrying information about the true angle to the point from which the measured radar signals $(S_{P1}, S_{P2})$ emanates, for all antenna angles at which measurements are performed;
- calculating a signal adapted filter $(h_1; h_2)$ based on any or both of the characteristics of the at least one antenna (7) and at least one measured reference radar signal, and
- calculating an angular focused radar signal $(S_{F1}; S_{F2})$ by filtering said updated radar signal $(S_{U1} ; S_{U2})$ using said signal adapted filter $(h_1 ; h_2)$.

2. Method for angular focusing of signals in a scanning non-monopulse radar system (17) comprising at least one antenna (19), the radar system being adapted to transmit radar signals forming at least one antenna beam (20) and to detect reflections of said at least one antenna beam caused by an object (22) at a point of reflection, comprising the steps of:

- measuring a single radar signal $(S_P)$ as a function of antenna angle $(\alpha)$, which radar signal is indicative of the power of antenna beam reflections detected at a plurality of antenna angles;
- estimating at least a first derivative signal $(S'_P)$ of the measured radar signal with respect to the antenna angle $(\alpha)$; and
- calculating, using a ratio of said at least first derivative signal $(S'_P)$ and the measured radar signal $(S_P)$, an antenna pointing error signal $(\varepsilon_2)$ indicative of a deviation between the antenna angle $(\alpha)$ and the true angle $(\theta)$ to the point of reflection for said plurality of antenna angles,

**characterized by** the steps of:

- calculating an updated radar signal $(S_{U3})$ based on the amplitude of the measured radar signal $(S_P)$ and a generated phase term $(\varepsilon_{2F_\Sigma})$ carrying information about the true angle to the point from which the measured radar signal $(S_P)$ emanates, for all antenna angles at which measurements are performed;
- calculating a signal adapted filter $(h_3)$ based on any or both of the characteristics of the at least one antenna (19) and at least one measured reference radar signal, and
- calculating an angular focused radar signal $(S_{F3})$ by filtering said updated radar signal $(S_{U3})$ using said signal adapted filter $(h_3)$.

3. Method according to claim 1 or 2, wherein said phase term $(\varepsilon_{1_\Sigma}, \varepsilon_{2_\Sigma})$ corresponds to the cumulative sum of the antenna pointing error signal $(\varepsilon_1, \varepsilon_2)$.

4. Method according to any of the claims 1 to 3, wherein the information on the characteristics of the at least one antenna (7; 19) comprises information on the shape of the at least one antenna beam (9, 11; 20).

5. Method according to any of the preceding claims, further comprising the step of filtering the antenna pointing error signal $(\varepsilon_1; \varepsilon_2)$ using an average forming filter to obtain a filtered antenna pointing error signal $(\varepsilon_{1F} ; \varepsilon2_F)$, and wherein the updated radar signal $(SU_1 ; S_{U2} ; S_{U3})$ is calculated based on said filtered antenna pointing error signal.

6. Method according to any of the preceding claims, wherein said generated phase term $(\varepsilon_{1F_\Sigma} ; \varepsilon_{2F_\Sigma})$ corresponds to the cumulative sum of the antenna pointing error signal $(\varepsilon_1; \varepsilon_2)$ after being filtered, i.e. to the cumulative sum of a filtered antenna pointing error signal.

7. Method according to any of the preceding claims, further comprising the step of using said angular focused radar signal $(S_{F1}; S_{F2}; S_{F3})$ in determining the angular position of said object (15; 22).

8. A scanning monopulse radar system (6) comprising at least one antenna (7) and at least two antenna elements $(P_1, P_2)$ for transmitting radar signals forming at least one antenna beam (9, 11), the radar system being adapted to detect reflections of said at least one antenna beam caused by an object (15) at a point of reflection, the radar system further comprising:

- measuring means (8) adapted to measure a first radar signal ($S_{P1}$) and a second radar signal ($S_{P2}$) as functions of antenna angle ($\alpha$), which first and second radar signals are indicative of the power of antenna beam reflections detected by the respective antenna element ($P_1$, $P_2$) at a plurality of antenna angles;
- calculation means (10) adapted to form a sum signal ($S_\Sigma$) and a difference signal ($S_\Delta$) from said first and second measured radar signals ($S_{P1}$, $S_{P2}$), and to calculate, using a ratio of said difference signal ($S_\Delta$) and said sum signal ($S_\Sigma$), an antenna pointing error signal ($\varepsilon_1$) indicative of a deviation between the antenna angle ($\alpha$) and the true angle ($\theta$) to the point of reflection for said plurality of antenna angles;

**characterized in that** the calculation means (10) further is adapted to:

- calculate an updated radar signal ($S_{U1}$ ; $S_{U2}$) based on the amplitude of the sum signal ($S_\Sigma$) and a generated phase term ($\varepsilon_{1F_\Sigma}$) carrying information about the true angle to the point from which the measured radar signals ($S_{P1}$, $S_{P2}$) emanates, for all antenna angles at which measurements are performed;
- calculate a signal adapted filter ($h_1$;$h_2$) based on any or both of the characteristics of the at least one antenna (7) and at least one measured reference radar signal, and
- calculating an angular focused radar signal ($S_{F1}$; $S_{F2}$) by filtering said updated radar signal ($S_{U1}$;$S_{U2}$) using said signal adapted filter ($h_1$;$h_2$).

9. A scanning non-monopulse radar system (17) comprising at least one antenna (19) for transmitting radar signals forming at least one antenna beam (20), the radar system being adapted to detect reflections of said at least one antenna beam caused by an object (22) at a point of reflection, the radar system further comprising:

- measuring means (21) adapted to measure a single radar signal ($S_P$) as a function of antenna angle ($\alpha$), which radar signal is indicative of the power of antenna beam reflections detected at a plurality of antenna angles;
- calculation means (10; 23) adapted to estimate at least a first derivative signal ($S'_P$) of the measured radar signal with respect to the antenna angle ($\alpha$), and to calculate, using a ratio of said at least first derivative signal ($S'_P$) and the measured radar signal ($S_P$), an antenna pointing error signal ($\varepsilon_2$) indicative of a deviation between the antenna angle ($\alpha$) and the true angle ($\theta$) to the point of reflection for said plurality of antenna angles,

**characterized in that** the calculation means (23) further is adapted to:

- calculate an updated radar signal ($S_{U3}$) based on the amplitude of the measured radar signal ($S_P$) and a generated phase term ($\varepsilon_{2F_\Sigma}$) carrying information about the true angle to the point from which the measured radar signal ($S_P$) emanates, for all antenna angles at which measurements are performed;
- calculate a signal adapted filter ($h_3$) based on any or both of the characteristics of the at least one antenna (19) and at least one measured reference radar signal, and
- calculate an angular focused radar signal ($S_{F3}$) by filtering said updated radar signal ($S_{U3}$) using said signal adapted filter ($h_3$).

10. Scanning radar system (6; 17) according to claim 8 or 9, wherein said calculation means (10; 23) is adapted to generate said phase term ($\varepsilon_{1_\Sigma}$, $\varepsilon_{2_\Sigma}$) such that it corresponds to the cumulative sum of the antenna pointing error signal ($\varepsilon_1$,$\varepsilon_2$).

11. Scanning radar system (6; 17) according to any of the claims 8 to 10, wherein said calculation means (10; 23) is adapted to calculate the signal adapted filter ($h_3$) based on characteristics of the at least one antenna (7; 19) comprising information on the shape of the at least one antenna beam (9, 11; 20).

12. Scanning radar system (6; 17) according to any of the claims 8 to 11, wherein said calculation means (10; 23) is further adapted to filter the antenna pointing error signal ($\varepsilon_1$; $\varepsilon_2$) using an average forming filter to obtain a filtered antenna pointing error signal ($\varepsilon_{1F}$ ; $\varepsilon_{2F}$), and to calculate the updated radar signal ($S_{U1}$; $S_{U2}$ ; $S_{U3}$) based on said filtered antenna pointing error signal.

13. Scanning radar system (6; 17) according to any of the claims 8 to 12, wherein said calculation means (10; 23) is adapted to calculate the updated radar signal ($S_{U3}$) based on the amplitude of the measured radar signal ($S_P$) and a phase term corresponding to the cumulative sum of the antenna pointing error signal ($\varepsilon_1$;$\varepsilon_2$) after being filtered,

i.e. to the cumulative sum of a filtered antenna pointing error signal.

14. Scanning radar system (6; 17) according to any of the claims 8 to 13, further comprising a reference reflector object for reflecting radar signals transmitted by the at least one antenna (7; 19) back towards said antenna in order for the radar system to use at least one reflected radar signal as a reference radar signal when calculating said signal adapted filter.

15. Scanning radar system (6; 17) according to any of the claims 8 to 14, further comprising a radar image rendering unit (31) adapted to generate a radar image based on the angular focused radar signal ($S_{F1}$ ; $S_{F2}$; $S_{F3}$ ).

16. A vehicle comprising a scanning radar system (6; 17) according to any of the claims 8 to 15, the vehicle further comprising a navigation control unit (33) adapted to automatically navigate the vehicle based on the angular focused radar signal ($S_{F1}$; $S_{F2}$; $S_{F3}$).

**Patentansprüche**

1. Verfahren zum Winkelfokussieren von Signalen in einem Monopuls-Abtastradarsystem (6), das wenigstens eine Antenne (7) und wenigstens zwei Antennenelemente ($P_1$, $P_2$) umfasst, wobei das Radarsystem so eingerichtet ist, dass es Radar-Signale sendet, die wenigstens einen Antennenstrahl (9, 11) bilden, und Reflexionen des wenigstens einen Antennenstrahls erfasst, die durch ein Objekt (15) an einem Reflexionspunkt verursacht werden, wobei das Verfahren die folgenden Schritte umfasst:

- Messen eines ersten Radar-Signals ($S_{P1}$) und eines zweiten Radar-Signals ($S_{P2}$) als Funktionen des Antennenwinkels ($\alpha$) wobei das erste und das zweite Radar-Signal die Leistung von Antennenstrahl-Reflexionen anzeigen, die durch das jeweilige Antennenelement ($P_1$, $P_2$) bei einer Vielzahl von Antennenwinkeln erfasst werden;
- Ausbilden eines Summen-Signals ($S_\Sigma$) sowie eines Differenz-Signals ($S_\Delta$) aus dem ersten und dem zweiten gemessenen Radar-Signal ($S_{P1}$, $S_{P2}$);
- Berechnen eines Antennenausrichtungsfehler-Signals ($\varepsilon_1$), das eine Abweichung zwischen dem Antennenwinkel ($\alpha$) und dem wahren Winkel ($\theta$) zu dem Reflexions-punkt anzeigt, für die Vielzahl von Antennenwinkeln unter Verwendung eines Verhältnisses des Differenz-Signals ($S_\Delta$) und des Summen-Signals ($S_\Sigma$);

**gekennzeichnet durch** die folgenden Schritte:

- Berechnen eines aktualisierten Radar-Signals ($S_{U1}$; $S_{U2}$) auf Basis der Amplitude des Summen-Signals ($S_\Sigma$) und eines erzeugten Phasen-Terms ($\varepsilon_{1F\Sigma}$), der eine Information über den wahren Winkel zu dem Punkt beinhaltet, von dem die gemessenen Radar-Signale ($S_{P1}$, $S_{P2}$) ausgehen, für alle Antennenwinkel, bei denen Messungen durchgeführt werden;
- Berechnen eines signalangepassten Filters ($h_1$; $h_2$) auf Basis einer oder beider der Charakteristiken der wenigstens einen Antenne (7) und wenigstens eines der gemessenen Bezugs-Radar-Signale, und
- Berechnen eines winkelfokussierten Radar-Signals ($S_{F1}$; $S_{F2}$) **durch** Filtern des aktualisierten Radar-Signals ($S_{U1}$; $S_{U2}$) unter Verwendung des signalangepassten Filters ($h_1$;$h_2$).

2. Verfahren zum Winkelfokussieren von Signalen in einem Nicht-Monopuls-Abtastradarsystem (17), das wenigstens eine Antenne (19) umfasst, wobei das Radarsystem so eingerichtet ist, dass es Radar-Signale sendet, die wenigstens einen Antennenstrahl (20) bilden, und Reflexionen des wenigstens einen Antennenstrahls erfasst, die durch ein Objekt (22) an einem Reflexionspunkt verursacht werden, wobei das Verfahren die folgenden Schritte umfasst:

- Messen eines einzelnen Radar-Signals ($S_P$) als eine Funktion des Antennenwinkels ($\alpha$), wobei das Radar-Signal die Leistung von Antennenstrahl-Reflexionen anzeigt, die bei einer Vielzahl von Antennenwinkeln erfasst werden;
- Schätzen wenigstens eines ersten Ableitungs-Signals ($S'_p$) des gemessenen Radar-Signals in Bezug auf den Antennenwinkel ($\alpha$); und
- Berechnen eines Antennenausrichtungsfehler-Signals ($\varepsilon_2$), das eine Abweichung zwischen dem Antennenwinkel ($\alpha$) und dem wahren Winkel ($\theta$) zu dem Reflexionspunkt anzeigt, für die Vielzahl von Antennenwinkeln unter Verwendung eines Verhältnisses des wenigstens eines ersten Ableitungs-Signals ($S'_p$) und des gemessenen Radar-Signals ($S_P$);

**gekennzeichnet durch** die folgenden Schritte:

- Berechnen eines aktualisierten Radar-Signals ($S_{U3}$) auf Basis der Amplitude des gemessenen Radar-Signals ($S_P$) und eines erzeugten Phasen-Terms ($\varepsilon_{2F_\Sigma}$), der eine Information über den wahren Winkel zu dem Punkt beinhaltet, von dem aus das gemessene Radarsignal ($S_P$) ausgeht, für alle Antennenwinkel, bei denen Messungen durchgeführt werden;
- Berechnen eines signalangepassten Filters ($h_3$) auf Basis einer oder beider der Charakteristiken der wenigstens einen Antenne (7) und wenigstens eines gemessenen Bezugs-Radar-Signals, und
- Berechnen eines winkelfokussierten Radar-Signals ($S_{F3}$) **durch** Filtern des aktualisierten Radar-Signals ($S_{U3}$) unter Verwendung des signalangepassten Filters ($h_3$).

3. Verfahren nach Anspruch 1 oder 2, wobei der Phasen-Term($\varepsilon_{1_\Sigma}$, $\varepsilon_{2_\Sigma}$) der kumulativen Summe des Antennenausrichtungsfehler-Signals ($\varepsilon_1$, $\varepsilon_2$) entspricht.

4. Verfahren nach einem der Ansprüche 1 bis 3, wobei die Informationen über die Charakteristik der wenigstens einen Antenne (7; 19) eine Information über die Form des wenigstens einen Antennenstrahls (9, 11; 20) umfassen.

5. Verfahren nach einem der vorangehenden Ansprüche, das des Weiteren den Schritt des Filterns des Antennenausrichtungsfehler-Signals ($\varepsilon_1$; $\varepsilon_2$) unter Verwendung eines durchschnittsbildenden Filters zum Ermitteln eines gefilterten Antennenausrichtungsfehler-Signals ($\varepsilon_{1F}$; $\varepsilon_{2F}$) umfasst, und wobei das aktualisierte Radar-Signal($S_{U1}$; $S_{U2}$; $S_{U3}$) auf Basis des gefilterten Antennenausrichtungsfehler-Signals berechnet wird.

6. Verfahren nach einem der vorangehenden Ansprüche, wobei der erzeugte Phasen-Term ($\varepsilon_{1F_\Sigma}$; $\varepsilon_{2F_\Sigma}$) der kumulativen Summe des Antennenausrichtungsfehler-Signals ($\varepsilon_1$; $\varepsilon_2$) nach Filtern, d.h. der kumulativen Summe des gefilterten Antennenausrichtungsfehler-Signals, entspricht.

7. Verfahren nach einem der vorangehenden Ansprüche, das des Weiteren den Schritt des Verwendens des winkelfokussierten Radar-Signals ($S_{F1}$; $S_{F2}$; $S_{F3}$) zum Bestimmen der Winkelposition des Objektes (15; 22) umfasst.

8. Monopuls-Abtastradarsystem (6), das wenigstens eine Antenne (7) und wenigstens zwei Antennenelemente ($P_1$, $P_2$) zum Senden von Radar-Signalen umfasst, die wenigstens einen Antennenstrahl (9, 11) bilden, wobei das Radarsystem so eingerichtet ist, dass es Reflexionen des wenigstens einen Antennenstrahls erfasst, die durch ein Objekt (15) an einem Reflexionspunkt verursacht werden, und das Radarsystem des Weiteren umfasst:

- eine Messeinrichtung (8), die so eingerichtet ist, dass sie ein erstes Radar-Signal ($S_{P1}$) und ein zweites Radar-Signal ($S_{P2}$) als Funktionen des Antennenwinkels ($\alpha$) misst, wobei das erste und das zweite Radar-Signal die Leistung von Antennenstrahl-Reflexionen anzeigen, die durch das jeweilige Antennenelement ($P_1$, $P_2$) bei einer Vielzahl von Antennenwinkeln erfasst werden;
- eine Berechnungseinrichtung (10), die so eingerichtet ist, dass sie aus dem ersten und dem zweiten gemessenen Radar-Signal ($S_{P1}$, $S_{P2}$) ein Summen-Signal ($S_\Sigma$) sowie ein Differenz-Signal ($S_\Delta$) ausbildet und für die Vielzahl von Antennenwinkeln unter Verwendung eines Verhältnisses des Differenz-Signals ($S_\Delta$) und des Summen-Signals ($S_\Sigma$) ein Antennenausrichtungsfehler-Signal ($\varepsilon_1$) berechnet, das eine Abweichung zwischen dem Antennenwinkel ($\alpha$) und dem wahren Winkel ($\theta$) zu dem Reflexionspunkt anzeigt;

**dadurch gekennzeichnet, dass** die Berechnungseinrichtung (10) des Weiteren so eingerichtet ist, dass sie:

- für alle Antennenwinkel auf Basis der Amplitude des Summen-Signals ($S_\Sigma$) und eines erzeugten Phasen-Terms ($\varepsilon_{1F_\Sigma}$), der eine Information über den wahren Winkel zu dem Punkt beinhaltet, von dem die gemessenen Radar-Signale ($S_{P1}$, $S_{P2}$) ausgehen, bei denen Messungen durchgeführt werden, ein aktualisiertes Radar-Signal ($S_{U1}$; $S_{U2}$) berechnet;
- auf Basis einer oder beider der Charakteristiken der wenigstens einen Antenne (7) und wenigstens eines der gemessenen Bezugs-Radar-Signale ein signalangepasstes Filter ($h_1$; $h_2$) berechnet, und
- unter Verwendung des signalangepassten Filters ($h_1$; $h_2$) durch Filtern des aktualisierten Radar-Signals ($S_{U1}$; $S_{U2}$) ein winkelfokussiertes Radar-Signal ($S_{F1}$; $S_{F2}$) berechnet.

9. Nicht-Monopuls-Abtastradarsystem (17), das wenigstens eine Antenne (19) zum Senden von Radar-Signalen umfasst, die wenigstens einen Antennenstrahl (20) bilden, wobei das Radarsystem so eingerichtet ist, dass es Reflexionen des wenigstens einen Antennenstrahls erfasst, die durch ein Objekt (22) an einem Reflexionspunkt verursacht werden, und das Radarsystem des Weiteren umfasst:

- eine Messeinrichtung (21), die so eingerichtet ist, dass sie ein einzelnes Radar-Signal ($S_P$) als eine Funktion des Antennenwinkels ($\alpha$) misst, wobei das Radar-Signal die Leistung von Antennenstrahl-Reflexionen anzeigt, die bei einer Vielzahl von Antennenwinkeln erfasst werden;
- eine Berechnungseinrichtung (10; 23), die so eingerichtet ist, dass sie wenigstens ein erstes Ableitungs-Signal ($S'_p$) des gemessenen Radar-Signals in Bezug auf den Antennenwinkel ($\alpha$) schätzt und für die Vielzahl von Antennenwinkeln unter Verwendung eines Verhältnisses des wenigstens einen ersten Ableitungs-Signals ($S'_p$) und des gemessenen Radar-Signals ($S_P$) ein Antennenausrichtungsfehler-Signal ($\varepsilon_2$) berechnet, das eine Abweichung zwischen dem Antennenwinkel ($\alpha$) und dem wahren Winkel ($\theta$) zu dem Reflexionspunkt anzeigt;

**dadurch gekennzeichnet, dass** die Berechnungseinrichtung (10) des Weiteren so eingerichtet ist, dass sie:

- für alle Antennenwinkel, bei denen Messungen durchgeführt werden, auf Basis der Amplitude des gemessenen Radar-Signals ($S_P$) und eines erzeugten Phasen-Terms ($\varepsilon_{2F_\Sigma}$), der eine Information über den wahren Winkel zu dem Punkt beinhaltet, von dem das gemessene Radarsignal ($S_P$) ausgeht, ein aktualisiertes Radar-Signal ($S_{U3}$) berechnet;
- auf Basis einer oder beider der Charakteristiken der wenigstens einen Antenne (7) und wenigstens eines gemessenen Bezugs-Radar-Signals ein signalangepasstes Filter ($h_3$) berechnet, und
- unter Verwendung des signalangepassten Filters ($h_3$) durch Filtern des aktualisierten Radar-Signals ($S_{U3}$) ein winkelfokussiertes Radar-Signal ($S_{F3}$) berechnet.

10. Abtastradarsystem (6; 17) nach Anspruch 8 oder 9, wobei die Berechnungseinrichtung (10; 23) so eingerichtet ist, dass sie den Phasen-Term($\varepsilon_{1_\Sigma}$, $\varepsilon_{2_\Sigma}$) so erzeugt, dass er der kumulativen Summe des Antennenausrichtungsfehler-Signals ($\varepsilon_1$, $\varepsilon_2$) entspricht.

11. Abtastradarsystem (6; 17) nach einem der Ansprüche 8 bis 10, wobei die Berechnungseinrichtung (10; 23) so eingerichtet ist, dass sie das signalangepasste Filter ($h_3$) auf Basis von Charakteristiken der wenigstens einen Antenne (7; 19) berechnet, die eine Information über die Form des wenigstens einen Antennenstrahls (9, 11; 20) umfassen.

12. Abtastradarsystem (6; 17) nach einem der Ansprüche 8 bis 11, wobei die Berechnungseinrichtung (10; 23) des Weiteren so eingerichtet ist, dass sie das Antennenausrichtungsfehler-Signal ($\varepsilon_1$; $\varepsilon_2$) unter Verwendung eines durchschnittsbildenden Filters filtert, um ein gefiltertes Antennenausrichtungsfehler-Signal ($\varepsilon_{1F}$; $\varepsilon_{2F}$) zu ermitteln, und sie das aktualisierte Radar-Signal($S_{U1}$; $S_{U2}$; $S_{U3}$) auf Basis des gefilterten Antennenausrichtungsfehler-Signals berechnet.

13. Abtastradarsystem (6; 17) nach einem der Ansprüche 8 bis 12, wobei die Berechnungseinrichtung (10; 23) so eingerichtet ist, dass sie das aktualisierte Radarsignal ($S_{U3}$) auf Basis der Amplitude des gemessenen Radar-Signals ($S_P$) und eines Phasen-Terms berechnet, der der kumulativen Summe des Antennenausrichtungsfehler-Signals ($\varepsilon_1$, $\varepsilon_2$) nach Filtern, d.h. der kumulativen Summe des gefilterten Antennenausrichtungsfehler-Signals, entspricht.

14. Abtastradarsystem (6; 17) nach einem der Ansprüche 8 bis 13, das des Weiteren ein Bezugs-Reflektorobjekt umfasst, mit dem durch die wenigstens eine Antenne (7; 19) gesendete Radar-Signale zu der Antenne zurück reflektiert werden, damit das Radarsystem beim Berechnen des signalangepassten Filters wenigstens ein reflektiertes Radar-Signal als ein Bezugs-Radar-Signal verwendet.

15. Abtastradarsystem (6; 17) nach einem der Ansprüche 8 bis 14, das des Weiteren eine Radar-Bildwiedergabeeinheit (31) umfasst, die so eingerichtet ist, dass sie ein Radar-Bild auf Basis des winkelfokussierten Radar-Signals ($S_{F1}$; $S_{F2}$; $S_{F3}$) erzeugt.

16. Fahrzeug, dass ein Abtastradarsystem (6; 17) nach einem der Ansprüche 8 bis 15 umfasst, wobei das Fahrzeug des Weiteren eine Navigations-Steuerungseinheit (33) umfasst, die zum automatischen Navigieren des Fahrzeugs auf Basis des winkelfokussierten Radar-Signals ($S_{F1}$; $S_{F2}$; $S_{F3}$) eingerichtet ist.

**Revendications**

1. Procédé pour la focalisation angulaire de signaux dans un système radar monopulse à balayage (6) comprenant au moins une antenne (7) et au moins deux éléments d'antenne ($P_1$, $P_2$), le système radar étant adapté pour émettre des signaux radar formant au moins un faisceau d'antenne (9, 11) et pour détecter des réflexions dudit au moins un faisceau d'antenne provoquées par un objet (15) au niveau d'un point de réflexion, comprenant les étapes consistant à :

   - mesurer un premier signal radar ($S_{P1}$) et un second signal radar ($S_{P2}$) en fonction d'un angle d'antenne ($\alpha$), lesquels premier et second signaux radar sont indicatifs de la puissance de réflexions de faisceau d'antenne détectées par l'élément d'antenne respectif ($P_1$, $P_2$) au niveau d'une pluralité d'angles d'antenne ;
   - former à partir desdits premier et second signaux radar mesurés ($S_{P1}$, $S_{P2}$) un signal de somme ($S_\Sigma$) et un signal de différence ($S_\Delta$) ;
   - calculer, en utilisant un rapport dudit signal de différence ($S_\Delta$) et dudit signal de somme ($S_\Sigma$), un signal d'erreur de pointage d'antenne ($\varepsilon_1$) indicatif d'un écart entre l'angle d'antenne ($\alpha$) et l'angle réel ($\theta$) au point de réflexion pour ladite pluralité d'angles d'antenne ;

   **caractérisé par** les étapes consistant à :

   - calculer un signal radar mis à jour ($S_{U1}$ ; $S_{U2}$) sur la base de l'amplitude du signal de somme ($S_\Sigma$) et d'un terme de phase généré ($\varepsilon_{1F\Sigma}$) portant des informations sur l'angle réel au point duquel les signaux radar mesurés ($S_{P1}$, $S_{P2}$) émanent, pour tous les angles d'antenne au niveau desquels des mesures sont effectuées ;
   - calculer un filtre adapté au signal ($h_1$ ; $h_2$) sur la base de l'une ou l'autre ou des deux des caractéristiques de la au moins une antenne (7) et d'au moins un signal radar de référence mesuré, et
   - calculer un signal radar focalisé angulaire ($S_{F1}$ ; $S_{F2}$) en filtrant ledit signal radar mis à jour ($S_{U1}$ ; $S_{U2}$) en utilisant ledit filtre adapté au signal ($h_1$ ; $h_2$).

2. Procédé pour la focalisation angulaire de signaux dans un système radar non-monopulse à balayage (17) comprenant au moins une antenne (19), le système radar étant adapté pour émettre des signaux radar formant au moins un faisceau d'antenne (20) et pour détecter des réflexions dudit au moins un faisceau d'antenne provoquées par un objet (22) au niveau d'un point de réflexion, comprenant les étapes consistant à :

   - mesurer un seul signal radar ($S_P$) en fonction d'un angle d'antenne ($\alpha$), lequel signal radar est indicatif de la puissance de réflexions de faisceau d'antenne détectées au niveau d'une pluralité d'angles d'antenne ;
   - estimer au moins un premier signal de dérivée ($S'_P$) du signal radar mesuré par rapport à l'angle d'antenne ($\alpha$) ; et
   - calculer, en utilisant un rapport dudit au moins un premier signal de dérivée ($S'_P$) et du signal radar mesuré ($S_P$), un signal d'erreur de pointage d'antenne ($\varepsilon_2$) indicatif d'un écart entre l'angle d'antenne ($\alpha$) et l'angle réel ($\theta$) au point de réflexion pour ladite pluralité d'angles d'antenne,

   **caractérisé par** les étapes consistant à :

   - calculer un signal radar mis à jour ($S_{U3}$) sur la base de l'amplitude du signal radar mesuré ($S_P$) et d'un terme de phase généré ($\varepsilon_{2F\Sigma}$) portant des informations sur l'angle réel au point duquel le signal radar mesuré ($S_P$) émane, pour tous les angles d'antenne au niveau desquels des mesures sont effectuées ;
   - calculer un filtre adapté au signal ($h_3$) sur la base de l'une ou l'autre ou des deux des caractéristiques de la au moins une antenne (19) et d'au moins un signal radar de référence mesuré, et
   - calculer un signal radar focalisé angulaire ($S_{F3}$) en filtrant ledit signal radar mis à jour ($S_{U3}$) en utilisant ledit filtre adapté au signal ($h_3$).

3. Procédé selon la revendication 1 ou 2, dans lequel ledit terme de phase ($\varepsilon_{1\Sigma}$, $\varepsilon_{2\Sigma}$) correspond à la somme cumulée du signal d'erreur de pointage d'antenne ($\varepsilon_1$, $\varepsilon_2$).

4. Procédé selon l'une quelconque des revendications 1 à 3, dans lequel les informations sur les caractéristiques de la au moins une antenne (7 ; 19) comprennent des informations sur la forme du au moins un faisceau d'antenne (9, 11 ; 20).

5. Procédé selon l'une quelconque des revendications précédentes, comprenant en outre l'étape consistant à filtrer le signal d'erreur de pointage d'antenne ($\varepsilon_1$ ; $\varepsilon_2$) en utilisant un filtre de formation de moyenne pour obtenir un signal d'erreur de pointage d'antenne filtré ($\varepsilon_{1F}$ ; $\varepsilon_{2F}$) , et dans lequel le signal radar mis à jour ($S_{U1}$ ; $S_{U2}$ ; $S_{U3}$) est calculé sur la base dudit signal d'erreur de pointage d'antenne filtré.

6. Procédé selon l'une quelconque des revendications précédentes, dans lequel ledit terme de phase généré ($\varepsilon_{1F\Sigma}$ ; $\varepsilon_{2F\Sigma}$) correspond à la somme cumulée du signal d'erreur de pointage d'antenne ($\varepsilon_1$ ; $\varepsilon_2$) après avoir été filtré, c.-à-d. à la somme cumulée d'un signal d'erreur de pointage d'antenne filtré.

7. Procédé selon l'une quelconque des revendications précédentes, comprenant en outre l'étape consistant à utiliser ledit signal radar focalisé angulaire ($S_{F1}$ ; $S_{F2}$ ; $S_{F3}$) dans la détermination de la position angulaire dudit objet (15 ; 22).

8. Système radar monopulse à balayage (6) comprenant au moins une antenne (7) et au moins deux éléments d'antenne ($P_1$, $P_2$) pour émettre des signaux radar formant au moins un faisceau d'antenne (9, 11), le système radar étant adapté pour détecter des réflexions dudit au moins un faisceau d'antenne provoquées par un objet (15) au niveau d'un point de réflexion, le système radar comprenant en outre :

- des moyens de mesure (8) adaptés pour mesurer un premier signal radar ($S_{P1}$) et un second signal radar ($S_{P2}$) en fonction d'un angle d'antenne ($\alpha$), lesquels premier et second signaux radar sont indicatifs de la puissance de réflexions de faisceau d'antenne détectées par l'élément d'antenne respectif ($P_1$, $P_2$) au niveau d'une pluralité d'angles d'antenne ;
- des moyens de calcul (10) adaptés pour former un signal de somme ($S_\Sigma$) et un signal de différence ($S_\Delta$) à partir desdits premier et second signaux radar mesurés ($S_{P1}$, $S_{P2}$), et pour calculer, en utilisant un rapport dudit signal de différence ($S_\Delta$) et dudit signal de somme ($S_\Sigma$), un signal d'erreur de pointage d'antenne ($\varepsilon_1$) indicatif d'un écart entre l'angle d'antenne ($\alpha$) et l'angle réel ($\theta$) au point de réflexion pour ladite pluralité d'angles d'antenne ;

**caractérisé en ce que** les moyens de calcul (10) sont en outre adaptés pour :

- calculer un signal radar mis à jour ($S_{U1}$ ; $S_{U2}$) sur la base de l'amplitude du signal de somme ($S_\Sigma$) et d'un terme de phase généré ($\varepsilon_{1F\Sigma}$) portant des informations sur l'angle réel au point duquel les signaux radar mesurés ($S_{P1}$, $S_{P2}$) émanent, pour tous les angles d'antenne au niveau desquels des mesures sont effectuées ;
- calculer un filtre adapté au signal ($h_1$ ; $h_2$) sur la base de l'une ou l'autre ou des deux des caractéristiques de la au moins une antenne (7) et d'au moins un signal radar de référence mesuré, et
- calculer un signal radar focalisé angulaire ($S_{F1}$ ; $S_{F2}$) en filtrant ledit signal radar mis à jour ($S_{U1}$ ; $S_{U2}$) en utilisant ledit filtre adapté au signal ($h_1$ ; $h_2$).

9. Système radar non-monopulse à balayage (17) comprenant au moins une antenne (19) pour émettre des signaux radar formant au moins un faisceau d'antenne (20), le système radar étant adapté pour détecter des réflexions dudit au moins un faisceau d'antenne provoquées par un objet (22) au niveau d'un point de réflexion, le système radar comprenant en outre :

- des moyens de mesure (21) adaptés pour mesurer un seul signal radar ($S_P$) en fonction d'un angle d'antenne ($\alpha$), lequel signal radar est indicatif de la puissance de réflexions de faisceau d'antenne détectées au niveau d'une pluralité d'angles d'antenne ;
- des moyens de calcul (10 ; 23) adaptés pour estimer au moins un premier signal de dérivée ($S'_P$) du signal radar mesuré par rapport à l'angle d'antenne ($\alpha$), et pour calculer, en utilisant un rapport dudit au moins un premier signal de dérivée ($S'_P$) et du signal radar mesuré ($S_P$), un signal d'erreur de pointage d'antenne ($\varepsilon_2$) indicatif d'un écart entre l'angle d'antenne ($\alpha$) et l'angle réel ($\theta$) au point de réflexion pour ladite pluralité d'angles d'antenne,

**caractérisé en ce que** les moyens de calcul (23) sont en outre adaptés pour :

- calculer un signal radar mis à jour ($S_{U3}$) sur la base de l'amplitude du signal radar mesuré ($S_P$) et d'un terme de phase généré ($\varepsilon_{2F\Sigma}$) portant des informations sur l'angle réel au point duquel le signal radar mesuré ($S_P$) émane, pour tous les angles d'antenne au niveau desquels des mesures sont effectuées ;
- calculer un filtre adapté au signal ($h_3$) sur la base de l'une ou l'autre ou des deux des caractéristiques de la au moins une antenne (19) et d'au moins un signal radar de référence mesuré, et
- calculer un signal radar focalisé angulaire ($S_{F3}$) en filtrant ledit signal radar mis à jour ($S_{U3}$) en utilisant ledit filtre adapté au signal ($h_3$).

10. Système radar à balayage (6 ; 17) selon la revendication 8 ou 9, dans lequel lesdits moyens de calcul (10 ; 23) sont adaptés pour générer ledit terme de phase ($\varepsilon_{1\Sigma}$, $\varepsilon_{2\Sigma}$) de sorte qu'il corresponde à la somme cumulée du signal d'erreur de pointage d'antenne ($\varepsilon_1$, $\varepsilon2$).

11. Système radar à balayage (6 ; 17) selon l'une quelconque des revendications 8 à 10, dans lequel lesdits moyens de calcul (10 ; 23) sont adaptés pour calculer le filtre adapté au signal ($h_3$) sur la base de caractéristiques de la au moins une antenne (7 ; 19) comprenant des informations sur la forme du au moins un faisceau d'antenne (9, 11 ; 20).

12. Système radar à balayage (6 ; 17) selon l'une quelconque des revendications 8 à 11, dans lequel lesdits moyens de calcul (10 ; 23) sont adaptés pour filtrer le signal d'erreur de pointage d'antenne ($\varepsilon_1$; $\varepsilon_2$) en utilisant un filtre de formation de moyenne pour obtenir un signal d'erreur de pointage d'antenne filtré ($\varepsilon_{1F}$; $\varepsilon_{2F}$), et pour calculer le signal radar mis à jour ($S_{U1}$ ; $S_{U2}$ ; $S_{U3}$) sur la base dudit signal d'erreur de pointage d'antenne filtré.

13. Système radar à balayage (6 ; 17) selon l'une quelconque des revendications 8 à 12, dans lequel lesdits moyens de calcul (10 ; 23) sont adaptés pour calculer le signal radar mis à jour ($S_{U3}$) sur la base de l'amplitude du signal radar mesuré ($S_P$) et d'un terme de phase correspondant à la somme cumulée du signal d'erreur de pointage d'antenne ($\varepsilon_1$ ; $\varepsilon_2$) après avoir été filtré, c.-à-d. à la somme cumulée d'un signal d'erreur de pointage d'antenne filtré.

14. Système radar à balayage (6 ; 17) selon l'une quelconque des revendications 8 à 13, comprenant en outre un objet réflecteur de référence pour réfléchir des signaux radar émis par la au moins une antenne (7 ; 19) en retour vers ladite antenne afin que le système radar utilise au moins un signal radar réfléchi comme un signal radar de référence lors du calcul dudit filtre adapté au signal.

15. Système radar à balayage (6 ; 17) selon l'une quelconque des revendications 8 à 14, comprenant en outre une unité de rendu d'image radar (31) adaptée pour générer une image radar sur la base du signal radar focalisé angulaire ($S_{F1}$ ; $S_{F2}$ ; $S_{F3}$).

16. Véhicule comprenant un système radar à balayage (6 ; 17) selon l'une quelconque des revendication 8 à 15, le véhicule comprenant en outre une unité de commande de navigation (33) adaptée pour faire naviguer automatiquement le véhicule sur la base du signal radar focalisé angulaire ($S_{F1}$ ; $S_{F2}$ ; $S_{F3}$).

**FIG 1**

**FIG 2**

**FIG 3**

**FIG 4**

**FIG 5**

FIG 6

**FIG 7**

FIG 8

**FIG 9**

**FIG 10**

**FIG 11**

**FIG 12**

**FIG 13**

**FIG 14**

**FIG 15**

**FIG 16**

**FIG 17**

FIG 18

FIG 19

| | |
|---|---|
| Measuring at least one radar signal as a result of radar illumination of an object | S1 |

↓

| | |
|---|---|
| Calculating an antenna pointing error based on measured radar signal(s) | S2 |

↓

| | |
|---|---|
| Calculating an updated radar signal based on measured radar signal(s) and calculated antenna pointing error | S3 |

↓

| | |
|---|---|
| Calculating a signal adapted filter based on antenna characteristics and/or measured reference radar signal | S4 |

↓

| | |
|---|---|
| Calculating a focused radar signal by filtering the updated radar signal using the signal adapted filter | S5 |

↓

| | |
|---|---|
| Using the focused radar signal in determining the angular position of the object | S6 |

# FIG 20

**FIG 21**

**EP 2 507 647 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6661366 B2
- US 2008042896 A1
- US 7671789 B1
- US 7236125 B

**Non-patent literature cited in the description**

- **LACOMME et al.** Air and Spaceborne Radar Systems. SciTech Publishing, 2001
- **BARTON ; WARD.** Handbook of Radar Measurement. Artech House, 1984, 19